(19) 

Europäisches
Patentamt
European
Patent Office
Office européen
des brevets

(11) **EP 4 421 190 A1**

(12) **EUROPEAN PATENT APPLICATION**
published in accordance with Art. 153(4) EPC

(43) Date of publication:
**28.08.2024 Bulletin 2024/35**

(21) Application number: **22901140.8**

(22) Date of filing: **21.11.2022**

(51) International Patent Classification (IPC):
**C21B 13/00** *(2006.01)* **C21B 3/06** *(2006.01)*
**C21C 1/02** *(2006.01)* **C22B 5/12** *(2006.01)*
**C22B 9/10** *(2006.01)*

(52) Cooperative Patent Classification (CPC):
**C21B 3/06; C21B 13/00; C21C 1/02; C22B 5/12;
C22B 9/10;** Y02P 10/20

(86) International application number:
**PCT/JP2022/043012**

(87) International publication number:
**WO 2023/100707 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 JP 2021194375**

(71) Applicant: **JFE Steel Corporation
Tokyo 100-0011 (JP)**

(72) Inventors:
• **NAKASE, Kenji**
  **Tokyo 100-0011 (JP)**
• **MINATANI, Kazuya**
  **Tokyo 100-0011 (JP)**
• **NAKAI, Yoshie**
  **Tokyo 100-0011 (JP)**
• **OKUYAMA, Goro**
  **Tokyo 100-0011 (JP)**

(74) Representative: **Haseltine Lake Kempner LLP
One Portwall Square
Portwall Lane
Bristol BS1 6BH (GB)**

(54) **PRODUCTION METHOD FOR METAL IRON**

(57)     Proposed is a method for producing metallic iron with a low phosphorus concentration from a raw material containing iron oxide and phosphorus as ingredients. The method for producing metallic iron includes a high-temperature reduction step of heating a raw material containing oxide that includes iron oxide and phosphorus, as ingredients, under a reducing gas atmosphere to generate metallic iron resulting from reduction of the iron oxide and a slag phase formed of an unreduced portion of the oxide, and to cause the slag phase to contain the phosphorus. It is preferable that the raw material be iron ore, or ingredient-adjusting-material-added iron ore obtained by adding and mixing an ingredient-adjusting material into iron ore, the basicity of the raw material be 4.0 or less, the temperature and the oxygen partial pressure in the high-temperature reduction step be within predetermined ranges, and a crushing and separation process or a heating and melting process be applied to the mixture subjected to the reduction treatment so that the mixture is separated into the metal phase and the slag phase.

FIG. 1

**Description**

Technical Field

The present invention relates to a method for producing metallic iron with a low phosphorus concentration from a raw material containing iron oxide and a phosphorus compound.

Background Art

In recent years, there has been an increasing demand for expanded use of cold iron sources (e.g., iron scrap) in the steel industry. To build a recycling society, recycling iron sources is absolutely essential. Further, increasing the amount of scrap used is essential to meet the demand for reducing $CO_2$ emissions nowadays. The use of scrap can reduce $CO_2$ emissions because a production process by scrap does not require a reduction step, unlike iron ore, which is iron oxide ($Fe_2O_3$). As a result, the amount of cold iron sources used has been steadily increasing.

The blast furnace-converter method is a steelmaking process including supplying iron ore ($Fe_2O_3$) as a raw material into a blast furnace together with coke (C source) as a reducing agent to produce molten pig iron with a C concentration of about 4.5 to 5% and then charging the obtained molten pig iron into a converter to remove C, Si, and P, which are impurity ingredients, through oxidation. When molten pig iron is produced with a blast furnace, the reduction process for iron ore requires about 500 kg of carbon source to obtain 1 ton of molten pig iron and produces about 2 tons of $CO_2$ gas. Meanwhile, when molten steel is produced using iron scrap as a raw material, a carbon source required for the reduction process for iron ore is not needed. Thus, when the energy required to melt iron scrap is considered, replacing 1 ton of molten pig iron with 1 ton of iron scrap leads to a reduction of $CO_2$ emissions by about 1.5 tons. This shows that the amount of scrap used should be increased to reduce greenhouse gas emissions and maintain production activities at the same time.

However, the tight supply and demand for iron scrap, especially high-grade iron scrap, which is essential for producing high-grade steel, has increased the need for reduced iron to replace scrap. Reduced iron is produced by reducing iron ore, but does not require the C concentration in the iron produced to be as high as in the blast furnace-converter method. Thus, since an excessive amount of the C source is not used, it is possible to reduce $CO_2$ emissions by about 0.2 tons per 1 ton of iron. $CO_2$ emissions can be further reduced by using hydrogen or hydrocarbon gas, such as natural gas, as the reducing agent instead of C source. One of the problems with using reduced iron is that the reduced iron contains phosphorus. Phosphorus contained in a steel product leads to quality degradation such as hot brittleness. Therefore, it is essential to reduce the phosphorus concentration to a level that meets the required quality. However, when producing molten iron by melting reduced iron using the electric furnace method, a larger proportion of phosphorus in the reduced iron enters the molten iron (also referred to as rephosphorization). Therefore, the reduced iron currently available is produced from high-grade iron ore with a low phosphorus concentration (a phosphorus concentration of approximately 0.01 mass%), and has a phosphorus concentration of approximately 0.02 mass%.

Meanwhile, high-grade iron ore with a low phosphorus concentration is predicted to be depleted in the future. Therefore, it will be required to produce molten steel using reduced iron produced from low-grade iron ore with a high phosphorus concentration, as a raw material. The phosphorus concentration in iron ore that is used for the current blast furnace method is 0.05 to 0.10 mass% (or 0.10 to 0.15 mass% when converted to the phosphorus concentration in reduced iron), and the phosphorus concentration is predicted to further increase in the future. Such a phosphorus concentration is 5 to 10 times or more than the phosphorus concentration in the reduced iron produced using high-grade iron ore with a low phosphorus concentration. To prevent the quality of a steel product from deteriorating due to phosphorus contained therein, it is necessary to remove phosphorus during the production of molten steel by melting reduced iron with a high phosphorus concentration, or to remove phosphorus during the production of reduced iron from iron ore with a high phosphorus concentration. Several phosphorus removal technologies have been proposed.

Patent Literature 1 proposes a dephosphorization refining flux used in an arc furnace to remove phosphorus in molten steel to a low phosphorus concentration in a relatively short time using the arc furnace only. The flux contains calcium oxide as the main ingredient, aluminum oxide by 5 to 15 mass%, and iron oxide 25 to 35 mass%, with the rest being unavoidable impurities.

Patent Literature 2 proposes a method of removing phosphorus by causing iron ore with a CaO content of 25 mass% or less and a ratio of $CaO/(SiO_2+Al_2O_3)$ of 5 or less, titanium-containing iron ore, nickel-containing ore, chromium-containing ore, or a mixture containing such ore as the main ingredient to contact gas selected from the group consisting of Ar, He, $N_2$, CO, $H_2$, and hydrocarbon, or mixture gas thereof at a temperature of 1600°C or higher.

Patent Literature 3 describes the development of a method of crushing iron ore with a high phosphorus content into particles of 0.5 mm or less, adding water thereto to achieve a pulp concentration of approximately 35 mass%, and adding $H_2SO_4$ or HCl to the solvent to allow a reaction to take place at a pH of 2.0 or less, thereby decomposing and eluting phosphorus minerals, and then collecting a magnetically attracted substance such as magnetite by magnetic separation to separate therefrom $SiO_2$, $Al_2O_3$, and the like, which are magnetically non-attracted substances, as slime by sedimentation, and also adding slaked lime or quicklime to neutralize P, which has been eluted into the solution, at a pH in the range of 5.0 to 10.0 to separate and recover P as calcium phosphate.

Patent Literature 4 proposes a method of reducing iron ore by reducing phosphorus under the conditions where no metallic iron is produced, then removing the phosphorus by vaporization, and continuing the reduction until metallic iron is obtained. Patent Literature 5 proposes a method of removing phosphorus by causing a phosphorus-containing substance to react with nitrogen-containing gas.

Citation List

Patent Literature

Patent Literature 1: Japanese Patent Laid-Open No. 8-120322
Patent Literature 2: Japanese Patent Laid-Open No. 54-83603
Patent Literature 3: Japanese Patent Laid-Open No. 60-261501
Patent Literature 4: Japanese Patent Laid-Open No. 2020-20010
Patent Literature 5: International Publication No. WO 2019/131128

Summary of Invention

Technical Problem

However, the above conventional technologies have the following problems.

That is, Patent Literature 1 is based on the premise of using an iron source with a low phosphorus concentration, such as scrap, and 350 g of flux is added to 7000 g of molten steel to reduce the phosphorus concentration in the molten steel from 0.020 mass% to 0.005 mass%. Assuming that the phosphorus concentration in reduced iron is 0.15 mass%, the amount of flux required to reduce the phosphorus concentration to 0.01 mass%, which roughly corresponds to the level in a steel product, is 230 kg per 1 ton of molten steel. Thus, the proportion of the volume of the flux in the arc furnace becomes high, which is problematic in that the amount of the processed molten steel would decrease, and production efficiency would thus decrease.

The method disclosed in Patent Literature 2 has a problem that the treatment temperature is as high as 1600°C or higher, which requires a lot of energy. Further, the method has another problem that since ore is processed in a molten state, the vessel would wear, and a high-temperature melt would be difficult to handle.

The method disclosed in Patent Literature 3 involves wet processing using acid, and thus has a problem that a long time and high cost would be required to dry the collected magnetically attracted substance to be used as the main raw material. Further, the method has another problem that a long time and high cost would be required to crush iron ore into particles of less than or equal to 0.5 mm in advance.

The method disclosed in Patent Literature 4 is required to reduce phosphorus present in ore in various chemical forms, such as apatite: $Ca_5(PO_4)(F, OH)$, strengite: $Fe(PO_4) \cdot 2(H_2O)$, or wavellite: $Al_3(PO_4)_2(F, OH)_3 \cdot 5H_2O$, which causes the problem that the dephosphorization ratio in the dephosphorization step is as low as 40 to 60%.

Patent Literature 5 discloses a method that entails treatment performed at a temperature and the oxygen partial pressure at which no metal is produced. The problem with this method is that oxide needs to be re-reduced for metallization after phosphorus removal.

The present invention has been made in view of the above circumstances, and it is an object of the present invention to provide a method for obtaining metallic iron with a low phosphorus concentration by performing dry processing on a solid raw material.

Solution to Problem

A method for producing metallic iron according to the present invention that advantageously solves the above problems includes a high-temperature reduction step of heating a raw material containing oxide that includes iron oxide and phosphorus, as ingredients, under a reducing gas atmosphere to produce metallic iron resulting from the reduction of the iron oxide and a slag phase formed of an unreduced portion of the oxide, and to cause the slag phase to contain the phosphorus.

Note that the method for producing metallic iron according to the present invention may have preferable solutions as follows.

(a) The raw material is iron ore, or ingredient-adjusting-material-added iron ore obtained by adding and mixing an ingredient-adjusting material to iron ore.

(b) A temperature and an oxygen partial pressure in the high-temperature reduction step are within a range that allow the iron oxide in the raw material to be thermodynamically stable as metallic iron and also within a range that allows the phosphorus in the raw material to be thermodynamically stable as phosphorus oxide contained in the slag phase.

(c) $W_{CaO}/W_{SiO2}$, which is the mass ratio of a CaO content $W_{CaO}$ to a $SiO_2$ content $W_{SiO2}$ in the raw material, is 4.0 or less.

(d) In the high-temperature reduction step, a temperature T is in a range higher than 750°C but not higher than 1200°C , and an oxygen partial pressure Poz (atm) satisfies a condition of the following relational expression [Expression 1].

(e) The method further includes a slag agglomeration step of agglomerating the slag phase by heating the raw material subjected to the high-temperature reduction to a temperature higher than or equal to a melt formation temperature of the slag phase but lower than or equal to a melting temperature of the metallic iron.

(f) The agglomeration step is performed at a treatment temperature $T_2$ (°C) that satisfies the following relational expression [Expression 2] with respect to a treatment temperature $T_1$ (°C) and oxygen partial pressure Poz in the high-temperature reduction step and $W_{CaO}/W_{SiO2}$ in the raw material.

(g) The method further includes a crushing and separating step of separating a mixture of the metallic iron and the slag phase obtained by the high-temperature reduction step or further by the agglomeration step into the metallic iron and the slag phase.

(h) The method further includes a heating and melting step of heating and melting a mixture of the metallic iron and the slag phase obtained by the high-temperature reduction step or further by the agglomeration step to separate the mixture into the metallic iron and the slag phase.

(i) The heating and melting step includes adding an auxiliary material such that a mass ratio of a CaO content to a $SiO_2$ content in a slag to be produced is between 1.5 and 4.0, inclusive.

$$-0.000018 \times T^2 + 0.0575 \times T - 55.0 - 0.6 \times W_{CaO}/W_{SiO2} \leq \log P_{O2} \leq -0.000015 \times T^2 + 0.0481 \times T - 48.1$$

$$T_2 \geq 37.3 \times W_{CaO}/W_{SiO2} + 0.12 \times T_1 - 1.58 \times \log P_{O2} + 1000$$

Herein, $W_{CaO}/W_{SiO2}$ is the ratio, in terms of mass, of the CaO content ($W_{CaO}$) to the $SiO_2$ content ($W_{SiO2}$) in the raw material.

Advantageous Effects of Invention

According to the present invention, in a high-temperature reduction step in which an oxide-containing raw material including iron oxide and a phosphorus compound is heated under a reducing gas atmosphere, metallic iron and a slag phase are produced, and the slag phase is caused to contain the phosphorus compound in the raw material in the state of phosphorus oxide. Therefore, metallic iron with a low phosphorus concentration can be obtained. Thus, it is possible to increase the used amount of an inexpensive raw material with a high phosphorus concentration, and also reduce the used amount of a refining agent in a steel refining process for producing a steel product from the obtained metallic iron. Furthermore, the present invention also contributes to the reduction of $CO_2$ emissions in the steel refining process, and thus is industrially advantageous.

Brief Description of Drawings

FIG. 1 is a graph showing the relationship between the temperature (T) and the oxygen partial pressure ($\log P_{O2}$) when, provided that the activity of FeO is 1, an equilibrium is reached for each of a reaction (a) in which phosphorus is removed as $P_2$ gas to a gas phase, and a reaction (b) in which iron oxide is reduced to metallic iron.
FIG. 2 is a graph showing the influence of the relationship between the treatment temperature T and the oxygen partial pressure $\log P_{O2}$ with respect to the reduction treatment of Example 1 on the phosphorus removal ratio.

FIG. 3 is a graph showing the influence of the relationship between the treatment temperature T and the oxygen partial pressure $\log P_{O_2}$ with respect to the reduction treatment of Example 2 on the phosphorus removal ratio.

FIG. 4 is a graph showing the influence of the relationship between the treatment temperature T and the oxygen partial pressure $\log P_{O_2}$ with respect to the reduction treatment shown in Table 4 of Example 3 on the phosphorus removal ratio.

FIG. 5 is a graph showing the influence of the relationship between the treatment temperature T and the oxygen partial pressure $\log P_{O_2}$ with respect to the reduction treatment shown in Table 5 of Example 3 on the phosphorus removal ratio.

FIG. 6 is a graph showing the influence of the relationship between the treatment temperature T and the oxygen partial pressure $\log P_{O_2}$ with respect to the reduction treatment shown in Table 6 of Example 3 on the phosphorus removal ratio.

FIG. 7 is a graph showing the influence of the relationship between the treatment temperature T and the oxygen partial pressure $\log P_{O_2}$ with respect to the reduction treatment shown in Table 7 of Example 3 on the phosphorus removal ratio.

Description of Embodiments

Hereinafter, an embodiment of the present invention will be specifically described. Note that each drawing is only schematic, and may differ from the actual embodiment. In addition, the following embodiment only shows examples of a device and a method for implementing the technical idea of the present invention. Thus, the configuration of the present invention is not limited to the one described below. That is, the technical idea of the present invention can be modified in various ways within the technical scope recited in the claims.

In the development of the present invention, the inventors have focused on an affordable substance with a high phosphorus concentration as a raw material for smelting metal, and conducted research on a method for producing reduced iron with a low phosphorus concentration from such iron ore. Iron ore used as the raw material for smelting metallic iron contains phosphorus mainly in an oxide state, such as $P_2O_5$. Besides, the iron ore also commonly contains metal oxide, such as CaO, $SiO_2$, MgO, $Al_2O_3$, MnO, $Mn_2O_3$, FeO, and $Fe_2O_3$. The inventors have focused on the phenomenon that in the process of reducing the oxide of a raw material, such as iron, to metal, phosphorus is concentrated in a slag phase formed from gangue (impurities such as $SiO_2$ and $Al_2O_3$) in the raw material and from a CaO source that may be added thereto as appropriate. Then, the inventors have found that it is possible to produce metal while suppressing the adsorption of phosphorus to the metallic iron by concentrating phosphorus in the slag phase without transferring phosphorus to the iron during the metallic iron formation stage and then removing phosphorus by melting the slag phase containing the concentrated phosphorus. The inventors have then continued with their research on a method of separating a metallic iron phase (metal phase) with a low phosphorus concentration from an oxide phase (i.e., slag phase) with a high phosphorus concentration.

Iron ore, which is a raw material, has different ingredients depending on the place where it is mined. The ingredients of iron ore are evaluated based on (1) the Fe content, (2) the gangue content, and (3) the P content. Table 1 shows examples of the ingredient composition of iron ore.

Table 1

|  | Ingredient composition [mass%] | | | |
|---|---|---|---|---|
|  | T.Fe | $SiO_2$ | $Al_2O_3$ | P |
| Iron ore A | 55.0 | 5.5 | 1.9 | 0.05 |
| Iron ore B | 59.0 | 3.6 | 2.3 | 0.10 |
| Iron ore C | 62.4 | 2.6 | 2.2 | 0.25 |
| Iron ore D | 63.0 | 3.5 | 1.4 | 0.20 |

(1) The Fe content is represented by the total iron content (T.Fe) in the iron ore. The larger the value, the higher the Fe content and the higher the value of the raw material. (2) The gangue content is represented by the total content of oxide other than Fe in the iron ore, and the major part thereof is $SiO_2$ and $Al_2O_3$. It also contains about 0.1 mass% CaO, MgO, and the like. The gangue ingredients are removed as impurities in the process of smelting the iron ore to obtain iron. Thus, the larger the gangue content, the lower the Fe content, which increases in the transportation cost and the smelting cost per unit of Fe content. (3) The P content is represented by the P content in the iron ore and is reduced together with Fe under strongly reducing conditions in a blast furnace and the like. Thus, most of the P content is absorbed into the resulting molten iron. Phosphorus in a steel product is a harmful impurity that causes hot brittleness. Thus, dephosphorization treatment is performed in a refining step. As described above, raw material iron ore contains various ingredients in various proportions, and reducing the gangue ingredients and the P ingredients from the iron ore is essential to economically obtain high-quality steel products.

As a result of intensive studies to obtain reduced iron with the gangue ingredients and the P ingredients removed therefrom, the present inventors have found that it is possible to separate a metallic iron phase with a low phosphorus concentration from a slag phase with a high phosphorus concentration. This is achieved by performing gaseous reduction at a temperature and in a reducing atmosphere where iron oxide and a phosphorus compound in iron ore are stable as metallic iron and phosphorus oxide, respectively.

That is, the inventors have confirmed that there is a reducing condition where a reaction (a) (represented by Chemical Formula 1) in which phosphorus present as $P_2O_5$ in iron ore is reduced does not proceed, and only a reaction (b) (represented by Chemical Formula 2) in which iron oxide is reduced to produce metallic iron proceeds.

[Formula 1]

$$2P_2O_5(l) = 2P_2(g) + 5O_2(g) \qquad (a)$$

[Formula 2]

$$2FeO(s) = 2Fe(s) + O_2(g) \qquad (b)$$

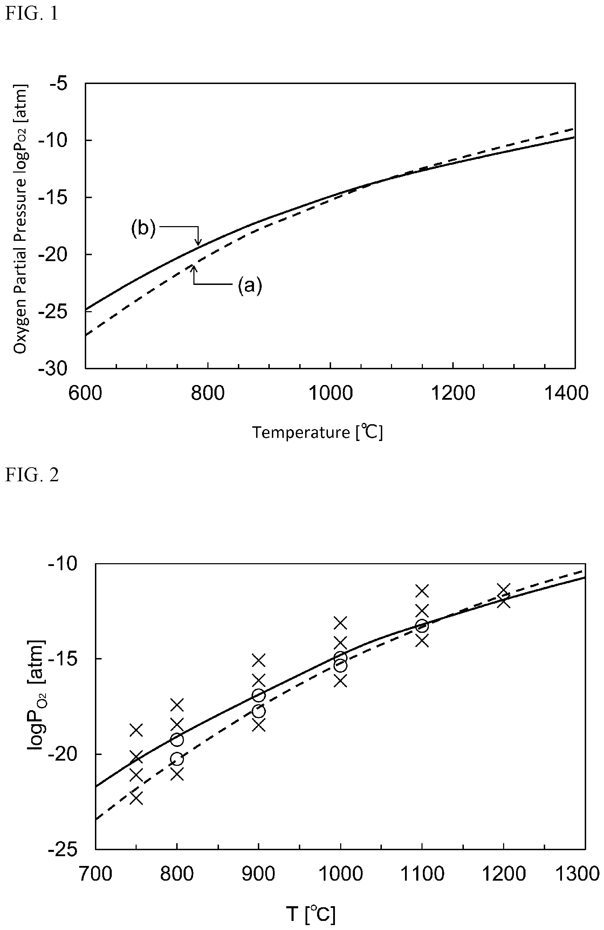

FIG. 1 is a graph showing the relationship between the temperature T and the oxygen partial pressure $P_{O2}$ when equilibrium is reached for each of the reaction (a) represented by Chemical Formula 1 and the reaction (b) represented by Chemical Formula 2. Herein, the activity of FeO and Fe is 1, the activity of $P_2O_5$ is 0.001, and the partial pressure of $P_2$ is 0.001 atm. In FIG. 1, only the reaction (b) proceeds to the right in a region of the temperature T and the oxygen partial pressure Poz which is below the solid line of the reaction (b) but above the broken line of the reaction (a), allowing metallic iron with a low phosphorus concentration to be produced. Note that the graph of FIG. 1 shows the equilibrium relationship between the temperature T and the oxygen partial pressure Poz corresponding to the activity and the partial pressure of each substance under the above condition. Such a relationship differs depending on the type of raw material iron ore and the type and amount of an auxiliary material added thereto.

Herein, the inventors have investigated in which an auxiliary material is added to raw material iron ore as an ingredient-adjusting material to cause a reaction with gangue ingredients to produce a low-melting-temperature compound, to achieve agglomeration and acceleration of reactions during heat reduction treatment. Metallic iron with a low phosphorus concentration can be obtained by subjecting the obtained mixture of metallic iron and a slag phase to a crushing and separation process, to separate the metallic iron from the slag phase. Magnetic separation performed after crushing or a specific gravity separation process performed after crushing can be used as the crushing and separation process. In this process, if the slag phase has agglomerated and thus has become coarsened, there is no need to perform fine crushing, which can reduce the work and effort required for the process. It is also possible to use the obtained mixture of the metallic iron and the slag phase by melting it with an electric furnace or the like. In such a case also, if the slag phase has agglomerated and thus has become coarse, separation is expected to be accelerated due to the difference in specific gravity.

In addition, by adding the auxiliary material, the $P_2O_5$ concentration in the mixture can be diluted, and thus the effect of reducing the activity of $P_2O_5$ can be obtained. This can shift the broken line of the reaction (a) of the graph in FIG. 1 downward and expand the above-mentioned optimal condition range of the temperature T and the oxygen partial pressure Poz where metallic iron with a low phosphorus concentration is produced.

In particular, when a substance containing CaO such as quicklime, slaked lime, calcium carbonate, or dolomite is added as the auxiliary material, a stable calcium phosphate-based compound is formed together with $P_2O_5$ in the mixture. That is, it is possible to obtain the effect of significantly reducing the activity of $P_2O_5$ and to shift the broken line of the reaction (a) in the graph of FIG. 1 further downward, thus expanding the range of the above-described optimal conditions of the temperature T and oxygen partial pressure Poz where metallic iron with a low phosphorus concentration can be produced.

However, if the proportion of the substance containing CaO is too high, a calcium ferrite (e.g., $CaO \cdot Fe_2O_3$ or $CaO \cdot FeO$)-based compound is formed with iron oxide, which is the main ingredient of iron ore, and CaO. This results in decreased activity of the iron oxide, and decreased reduction efficiency for the iron oxide. To increase the proportion of a metallic iron phase after the reduction, it is preferable to set the basicity $W_{CaO}/W_{SiO2}$ of the raw material to 4.0 or less with respect to the $SiO_2$ content in the iron ore. Herein, the basicity $W_{CaO}/W_{SiO2}$ of the raw material refers to the mass ratio of the CaO content $W_{CaO}$ to the $SiO_2$ content $W_{SiO2}$ in the raw material.

Iron oxide contained in the raw material iron ore is broadly classified as the hematite phase ($Fe_2O_3$ phase) and the goethite phase (FeO(OH) phase). The proportion of these phases varies depending on the type of ore. The goethite phase is stripped of water at a temperature of approximately 400°C and thus undergoes transformation into the hematite phase. This process of removing water allows the porosity and specific surface area of the iron ore to increase.

A reducing agent used for the above high-temperature reduction step is preferably a reducing gas, rather than a solid reducing agent. Solid reducing agents such as solid carbon, metal Al, and metal Si have extremely high reducing ability and cannot satisfy the above optimal conditions of the temperature T and the oxygen partial pressure Poz. Meanwhile, with the use of a reducing gas, it is possible to adjust the gas ingredients to thus meet the optimal conditions of the temperature T and the oxygen partial pressure Poz. It is also possible to efficiently reduce iron ore with increased porosity and increased specific surface area as described above, and thus, the treatment is expected to be completed in a short time. The reducing gas used is not limited to a particular type of gas, and may be any gas containing at least one reducing ingredient, such as CO, $H_2$, or $CH_4$. In addition, the reducing gas used is not limited to naturally-extracted gas and may be by-product gas such as blast furnace top gas or coke furnace gas, or $H_2$ gas produced by the electrolysis of water, either alone or in combination.

The high-temperature reduction step is preferably followed by a slag agglomeration step for agglomerating the slag. In the slag agglomeration step, the raw material subjected to the high-temperature reduction is heated to a temperature higher than or equal to the melt formation temperature Tm, s of the slag phase but lower than or equal to the melting temperature Tm, m of the metallic iron, so that the slag is agglomerated. The slag phase may be then cooled to form a solid phase. With the treatment at a temperature lower than or equal to the melt formation temperature Tm, s of the slag phase, the slag phase will remain as fine as about several ten μm. Therefore, a significant amount of labor would be required to sufficiently separate the slag phase from the metallic iron by performing subsequent crushing. The agglomeration step according to the present embodiment is performed at a temperature higher than or equal to the melt formation temperature Tm, s of the slag phase. Therefore, adjacent slag phases agglomerate to become coarsened up to several hundred μm. This can reduce the effort required for crushing and separation. However, if the heating is performed at a temperature lower than or equal to the melting temperature Tm, m of the metallic iron, the agglomeration of the metallic iron also proceeds. Thus, a slag phase covered with metallic iron would be formed, with the result that crushing and separation would become difficult to perform.

The melt formation temperature Tm, s of the slag refers to the temperature at which the slag begins to partially form melt when the temperature is increased. To determine the temperate, any one of the following simple methods MS1 to MS3 can be used. However, the method is not limited thereto.

MS1: A first method involves charging a solid sample in a vessel, such as a crucible, and continuously observing the sample in the vessel while increasing the temperature at a rate of less than or equal to 5°C/minute, preferably less than or equal to 1°C/minute, using an electric resistance furnace or the like under a target gas atmosphere, and then determining as the melt formation temperature the temperature at which the gaps between the adjacent particles of the solid sample have begun to disappear and the surface has thus begun to become partially smooth.

MS2: A second method determines as the melt formation temperature the temperature at which an endothermic peak has begun to occur when performing measurement while increasing the temperature at a rate of less than or equal to 5°C/minute, preferably less than or equal to 1°C/minute, under a target gas atmosphere using the differential thermal analysis method. Here, when multiple endothermic peaks are observed, the second method involves pausing the measurement at each temperature where the endothermic peak has occurred and observing the appearance of the measurement sample to determine, as the melt formation temperature, the lowest temperature at which the endothermic peaks have begun to occur among the temperatures at which the gaps between the adjacent particles of the solid sample have disappeared and the surface has thus become partially smooth.

MS3: A third method involves calculating the liquid phase ratio by inputting a sample composition and changing the temperature using thermodynamic calculation software of an electronic computer, and then determining as the melt formation temperature the temperature at which the calculated liquid phase ratio has exceeded 10%.

In addition, the melting temperature Tm, m of the metallic iron refers to the temperature at which the entire solid sample completely transforms into a liquid, and is desirably measured with any one of the following simple methods MM1 to MM3. However, the method is not limited to the ones mentioned above.

MM1: A first method involves charging a solid sample into a vessel, such as a crucible, and continuously observing the sample in the vessel while increasing the temperature at a rate of less than or equal to 5°C/minute, preferably 1°C/minute, using an electric resistance furnace or the like under a target gas atmosphere, and then determining as the melting temperature the temperature at which the gaps between the adjacent particles of the solid sample have completely disappeared and the surface has thus become partially smooth.

MM2: A second method involves, when performing measurement while increasing the temperature at a rate of less than or equal to 5°C/minute, preferably less than or equal to 1°C/minute, under a target gas atmosphere using the differential thermal analysis method, determining as the melting temperature the temperature corresponding to the minimal point of an endothermic peak. Here, when multiple endothermic peaks are observed, the second method involves pausing the measurement at each temperature where the endothermic peak has occurred and observing the appearance of the measurement sample to determine, as the melting temperature, the lowest temperature among the minimal points of the endothermic peaks among the temperatures at which the gaps between the adjacent particles of the solid sample have disappeared and the surface has thus become partially smooth.

MM3: A third method involves calculating the liquid phase ratio by inputting a sample composition and changing the temperature, using thermodynamic calculation software of an electronic computer, and then determining as the melting temperature the temperature at which the calculated liquid phase ratio has exceeded 95%.

The mixture of the metallic iron and slag phase, which has been obtained by the high-temperature reduction step, and further by the slag agglomeration step if necessary, is preferably subjected to a crushing and separating step of separating the metallic iron from the slag phase, or to a heating and melting step. As a crushing process for the crushing and separating step, the mixture can be crushed by using a rod mill, ball mill, jaw crusher, or the like, or crushed by dropping it from a high place, for example. As a separating process, the metallic iron can be separated by dry magnetic separation or specific gravity separation. In the heating and melting step, the mixture is heated and melted by an electric furnace or the like, and the molten metallic iron and slag phase are separated based on their difference in specific gravity, so that the slag can be removed, for example. It is preferable to set the mass ratio of the CaO content to the $SiO_2$ content in the produced slag to be between 1.5 and 4.0, inclusive, which can appropriately control the melting temperature and the viscosity of the slag, thus accelerating the separation of the slag from the metallic iron, and also suppressing rephosphorization.

Examples

(Example 1)

The powder of iron ore B shown in Table 1 was granulated and then charged into a rotary hearth furnace with a capacity of 5 tons per hour. Then, the reduction treatment was performed by controlling the treatment temperature T and the oxygen partial pressure Poz while adjusting the amounts of fuel gas and oxygen fed to a heating burner as well as their proportions. Natural gas was used as the fuel gas. The operating conditions for the equipment (rotary hearth furnace) were set to allow 120 minutes from the charging to discharging of the sample, and then, temperature measurement and gas composition analysis were performed at a place where the sample was present after 60 minutes had elapsed. The concentrations of carbon monoxide (CO) and carbon dioxide ($CO_2$) in the collected gas were measured using an infrared gas analyzer. The oxidation-reduction reaction herein is represented by a reaction (c) indicated by the following Chemical Formula 3. The oxygen partial pressure Poz was calculated from the measured value of the ratio $P_{CO}/P_{CO2}$ of the respective partial pressures based on the following Expressions (1) and (2). Expression (1) represents the Gibbs free energy change ΔG° of the reaction (c), and Expression (2) represents the equilibrium constant K of the reaction (c). In Expressions (1) and (2), T is the measured temperature (K), R is the gas constant (cal/(K-mol)), Pco and $P_{CO2}$ are the partial pressures of CO and $CO_2$, respectively, determined through the gas composition analysis.

[Formula 3]

$$2CO_2(g) = 2CO(g) + O_2(g) \qquad (c)$$

[Mathematical Expression 1]

$$\Delta G° = 134{,}300 - 40.74 \times T \ \text{(cal/mol)} \qquad (1)$$

$$K = exp(-\Delta G° \ / \ RT) = (P_{CO} \ / \ P_{CO2})^2 \cdot P_{O2} \qquad (2)$$

The sample discharged after the treatment was crushed by a rod mill and then partially subjected to chemical analysis. The crushed sample was separated into a magnetically attracted substance and a magnetically non-attracted substance by dry magnetic separation. The magnetically attracted substance and the magnetically non-attracted substance were regarded as the metal phase and slag phase, respectively, and then subjected to chemical analysis. From the obtained results of the analysis, the following values were calculated and arranged in Table 2 together with the experimental conditions. The metallization ratio is the value on a mass basis obtained by dividing the analysis value of the metallic iron content (M.Fe) in the crushed sample before magnetic separation by the analysis value of the total iron content (T.Fe) in the crushed sample before magnetic separation. The ratio of phosphorus to iron (P/Fe) in the metal phase is the value obtained by dividing the analysis value of P in the magnetically attracted substance by the analysis value of T.Fe in the magnetically attracted substance. (P) represents the analysis value of P in the magnetically non-attracted substance (slag phase).

[Table 2]

| No. | Temperature T | Gas composition $P_{CO}/P_{CO2}$ | Oxygen partial pressure | | Slag phase (P) | Metal phase | | Remarks |
|---|---|---|---|---|---|---|---|---|
| | | | $P_{O2}$ | $logP_{O2}$ | | Metallization ratio | P/Fe | |
| | °C | Partial pressure ratio | atm | atm | mass% | mass% | % | |
| 1 | 800 | 2.5 | 5.66E-20 | -19.25 | 0.45 | 81 | 0.020 | Invention Example |
| 2 | 800 | 8.0 | 5.53E-21 | -20.26 | 0.50 | 84 | 0.021 | Invention Example |
| 3 | 900 | 2.5 | 1.22E-17 | -16.92 | 0.54 | 86 | 0.021 | Invention Example |
| 4 | 900 | 6.5 | 1.80E-18 | -17.75 | 0.62 | 89 | 0.021 | Invention Example |
| 5 | 1000 | 2.5 | 1.12E-15 | -14.95 | 0.62 | 89 | 0.022 | Invention Example |
| 6 | 1000 | 4.0 | 4.39E-16 | -15.36 | 0.69 | 91 | 0.022 | Invention Example |
| 7 | 1100 | 2.5 | 5.37E-14 | -13.27 | 0.73 | 92 | 0.023 | Invention Example |
| 8 | 750 | 0.3 | 1.81E-19 | -18.74 | 0.12 | 0 | - | Comparative Example |
| 9 | 800 | 0.3 | 3.93E-18 | -17.41 | 0.12 | 0 | - | Comparative Example |
| 10 | 900 | 0.3 | 8.44E-16 | -15.07 | 0.12 | 0 | - | Comparative Example |
| 11 | 1000 | 0.3 | 7.80E-14 | -13.11 | 0.12 | 0 | - | Comparative Example |
| 12 | 1100 | 0.3 | 3.73E-12 | -11.43 | 0.12 | 0 | - | Comparative Example |
| 13 | 1200 | 0.3 | 1.05E-10 | - 9.98 | 0.12 | 0 | - | Comparative Example |
| 14 | 750 | 1.5 | 7.24E-21 | -20.14 | 0.13 | 3 | 0.021 | Comparative Example |
| 15 | 800 | 1.0 | 3.54E-19 | -18.45 | 0.13 | 4 | 0.023 | Comparative Example |
| 16 | 900 | 1.0 | 7.60E-17 | -16.12 | 0.13 | 5 | 0.024 | Comparative Example |
| 17 | 1000 | 1.0 | 7.02E-15 | -14.15 | 0.13 | 5 | 0.025 | Comparative Example |
| 18 | 1100 | 1.0 | 3.36E-13 | -12.47 | 0.13 | 6 | 0.028 | Comparative Example |
| 19 | 1200 | 1.5 | 4.22E-12 | -11.38 | 0.13 | 7 | 0.030 | Comparative Example |

(continued)

| No. | Temperature T | Gas composition $P_{CO}/P_{CO2}$ | Oxygen partial pressure | | Slag phase (P) | Metal phase | | Remarks |
|---|---|---|---|---|---|---|---|---|
| | | | $P_{O2}$ | $logP_{O2}$ | | Metallization ratio | P/Fe | |
| | °C | Partial pressure ratio | atm | atm | mass% | mass% | % | |
| 20 | 750 | 4.5 | 8.04E-22 | -21.09 | 0.10 | 80 | 0.165 | Comparative Example |
| 21 | 750 | 18 | 5.02E-23 | -22.30 | 0.10 | 95 | 0.161 | Comparative Example |
| 22 | 800 | 20 | 8.84E-22 | -21.05 | 0.09 | 95 | 0.162 | Comparative Example |
| 23 | 900 | 15 | 3.38E-19 | -18.47 | 0.08 | 96 | 0.164 | Comparative Example |
| 24 | 1000 | 10 | 7.02E-17 | -16.15 | 0.07 | 96 | 0.166 | Comparative Example |
| 25 | 1100 | 6.0 | 9.32E-15 | -14.03 | 0.07 | 97 | 0.165 | Comparative Example |
| 26 | 1200 | 3.0 | 1.05E-12 | -11.98 | 0.07 | 97 | 0.165 | Comparative Example |

As can be seen from Table 2, in the treatments No. 1 to 7, the metallization ratio is as high as 75 mass% or more, and the P/Fe value of the metal phase is 0.023% or less, which is significantly reduced compared to the P/Fe value (0.169%) of the iron ore B before the treatment. Meanwhile, in the treatment No. 8 to 13, no magnetically attracted substance was obtained, and thus no metal phase was confirmed. In the treatment No. 14 to 19, the P/Fe value in the metal phase is reduced while the metallization ratio is as low as 7 mass% at the maximum. This is considered because the proportion of carbon monoxide (CO) in the atmosphere during the treatment is too low to sufficiently reduce the iron oxide and phosphorus oxide in the raw material iron ore. In the treatment No. 21 to 26, the metallization ratio is as high as 75 mass% or more while the P/Fe value in the metal phase is as high as 0.161% or more. This is considered because the proportion of carbon monoxide (CO) in the atmosphere during the treatment was high, so that not only the iron oxide but also the phosphorus oxide in the raw material iron ore was reduced, and phosphorus resulting from the reduction was adsorbed on the metallic iron produced.

The results in Table 2 are presented in the form of a graph shown in FIG. 2, in which the relationship between the temperature T and the oxygen partial pressure $logP_{O2}$ during the treatment is plotted. In this graph, the case satisfying both that the metallization ratio is 75 mass% or more and that the P/Fe value in the metal phase is low is indicated by a circle (O), and the case satisfying either that the metallization ratio is low or that the P/Fe value in the metal phase is high is indicated by a cross mark (X). As is obvious from FIG. 2, when the temperature T for the high-temperature reduction is set higher than 750°C but lower than 1200°C, a high metallization ratio and low P/Fe value in the metal phase are achieved in a region below the solid line indicating the relationship between the treatment temperature T and the oxygen partial pressure $logP_{O2}$ in FIG. 2 but above the broken line indicating the relationship between the treatment temperature T and the oxygen partial pressure $logP_{O2}$ in FIG. 2. That is, to produce reduced iron with a low phosphorus concentration, it is preferable to reduce iron ore at the temperature T (°C) and the oxygen partial pressure $P_{O2}$ (atm) satisfying the following Relational Expression A.

[Expression A]

$$-0.000018 \times T^2 + 0.0575 \times T - 55.0$$

$$\leq logP_{O2} \leq -0.000015 \times T^2 + 0.0481 \times T - 48.1$$

An evaluation was also conducted for cases where a crushing process was performed, for example, by using a ball mill or a jaw crusher instead of the rod mill and by dropping the sample from a high place, and then the separation process was performed by sorting metallic iron by specific gravity separation instead of the dry magnetic separation. In both methods, separation of the metallic iron phase from the slag phase was possible as in the above case.

(Example 2)

Reduction treatment was carried out using equipment and a method similar to that in Example 1, with hydrogen gas employed as the fuel. As in Example 1, the experimental conditions and the results are organized in Table 3. The gas collected as in Example 1 was cooled to room temperature, and the resulting dew condensation water was collected by a drain pot and weighed.

The hydrogen ($H_2$) concentration in the gas after the removal of water therefrom was measured by a thermal conductivity-type gas analyzer, and the concentration of water vapor was calculated from the volume of the collected gas and the amount of the collected water. The oxidation-reduction reaction herein is represented by a reaction (d) indicated by the following Chemical Formula 4, and the oxygen partial pressure Poz was calculated from the measured value of the ratio $PH_2/P_{H2O}$ of the respective partial pressures based on the following Expressions (3) and (4). Expression (3) represents the Gibbs free energy change $\Delta G°$ of the reaction (d), and Expression (4) represents the equilibrium constant K of the reaction (d). In Expressions (3) and (4), T is the measured temperature (K), R is the gas constant (cal/(K-mol)), $PH_2$ and $P_{H2O}$ are the partial pressures of $H_2$ and $H_2O$ calculated, respectively, from the foregoing analysis values and calculated values.

[Formula 4]

$$2H_2O\,(g) = 2H_2(g) + O_2(g) \tag{d}$$

[Mathematical Expression 2]

$$\Delta G° = 118{,}300 - 26.70 \times T \ \ (\text{cal/mol}) \tag{3}$$

$$K = exp(-\Delta G° \,/\, RT) = (P_{H2} \,/\, P_{H2O})^2 \cdot P_{O2} \tag{4}$$

[Table 3]

| No. | Temperature T | Gas composition $P_{H2}/P_{H2O}$ | Oxygen partial pressure | | Slag phase (P) | Metal phase | | Remarks |
|---|---|---|---|---|---|---|---|---|
| | | | $P_{O2}$ | $logP_{O2}$ | | Metallization ratio | P/Fe | |
| | °C | Partial pressure ratio | atm | atm | mass% | mass% | % | |
| 27 | 800 | 3.5 | 4.48E-20 | -19.35 | 0.46 | 82 | 0.021 | Invention Example |
| 28 | 800 | 120 | 3.81E-21 | -20.42 | 0.52 | 85 | 0.021 | Invention Example |
| 29 | 900 | 2.5 | 9.94E-18 | -17.00 | 0.54 | 86 | 0.021 | Invention Example |
| 30 | 900 | 6.0 | 1.73E-18 | -17.76 | 0.62 | 89 | 0.022 | Invention Example |
| 31 | 1000 | 2.0 | 8.37E-16 | -15.08 | 0.62 | 89 | 0.022 | Invention Example |
| 32 | 1000 | 3.0 | 3.72E-16 | -15.43 | 0.69 | 91 | 0.023 | Invention Example |

(continued)

| No. | Temperature T | Gas composition $P_{H2}/P_{H2O}$ | Oxygen partial pressure | | Slag phase (P) | Metal phase | | Remarks |
|---|---|---|---|---|---|---|---|---|
| | | | $P_{O2}$ | $logP_{O2}$ | | Metallization ratio | P/Fe | |
| | °C | Partial pressure ratio | atm | atm | mass% | mass% | % | |
| 33 | 1100 | 1.5 | 4.49E-14 | -13.35 | 0.73 | 92 | 0.023 | Invention Example |
| 34 | 750 | 0.4 | 2.28E-19 | -18.64 | 0.12 | 0 | - | Comparative Example |
| 35 | 800 | 0.4 | 3.43E-18 | -17.46 | 0.12 | 0 | - | Comparative Example |
| 36 | 900 | 0.4 | 3.88E-16 | -15.41 | 0.12 | 0 | - | Comparative Example |
| 37 | 1000 | 0.4 | 2.09E-14 | -13.68 | 0.12 | 0 | - | Comparative Example |
| 38 | 1100 | 0.4 | 6.31E-13 | -12.20 | 0.12 | 0 | - | Comparative Example |
| 39 | 1200 | 0.4 | 1.20E-11 | -10.92 | 0.12 | 0 | - | Comparative Example |
| 40 | 750 | 2.0 | 9.11E-21 | -20.04 | 0.13 | 4 | 0.022 | Comparative Example |
| 41 | 800 | 2.0 | 1.37E-19 | -18.86 | 0.13 | 5 | 0.023 | Comparative Example |
| 42 | 900 | 1.5 | 2.76E-17 | -16.56 | 0.13 | 6 | 0.024 | Comparative Example |
| 43 | 1000 | 1.0 | 3.35E-15 | -14.48 | 0.13 | 7 | 0.026 | Comparative Example |
| 44 | 1100 | 0.8 | 1.58E-13 | -12.80 | 0.13 | 7 | 0.028 | Comparative Example |
| 45 | 1200 | 0.8 | 3.00E-12 | -11.52 | 0.13 | 8 | 0.030 | Comparative Example |
| 46 | 750 | 6.0 | 1.01E-21 | -20.99 | 0.10 | 80 | 0.165 | Comparative Example |
| 47 | 750 | 20 | 9.11E-23 | -22.04 | 0.09 | 95 | 0.162 | Comparative Example |
| 48 | 800 | 20 | 1.37E-21 | -20.86 | 0.09 | 95 | 0.162 | Comparative Example |
| 49 | 900 | 8 | 9.71E-19 | -18.01 | 0.08 | 96 | 0.164 | Comparative Example |
| 50 | 1000 | 5 | 1.34E-16 | -15.87 | 0.07 | 96 | 0.166 | Comparative Example |
| 51 | 1100 | 3.0 | 1.12E-14 | -13.95 | 0.07 | 97 | 0.165 | Comparative Example |
| 52 | 1200 | 2.0 | 4.79E-13 | -12.32 | 0.07 | 97 | 0.165 | Comparative Example |

As can be seen from Table 3, in the treatment No. 27 to 33, the metallization ratio is as high as 75 mass% or more, and the P/Fe value of the metal phase is 0.023% or less, which is significantly reduced compared with the P/Fe value (0.169%) of the iron ore B before the treatment. Meanwhile, in the treatment No. 34 to 39, no magnetically attracted substance was obtained, and thus no metal phase was confirmed. In the treatment No. 40 to 45, the P/Fe value in the metal phase is low while the metallization ratio is as low as 8 mass% at maximum. This is considered because the proportion of the hydrogen gas ($H_2$) in the atmosphere during the treatment was too low to sufficiently reduce the iron oxide and phosphorus oxide in the raw material iron ore. In the treatment No. 46 to 52, the metallization ratio is as high as 75 mass% or more while the P/Fe value in the metal phase is as high as 0.162% or more. This is considered because the proportion of the hydrogen gas ($H_2$) in the atmosphere during the treatment was high, so that not only the iron oxide but also the phosphorus oxide in the raw material iron ore was reduced, and the phosphorus resulting from the reduction was adsorbed to the metallic iron produced.

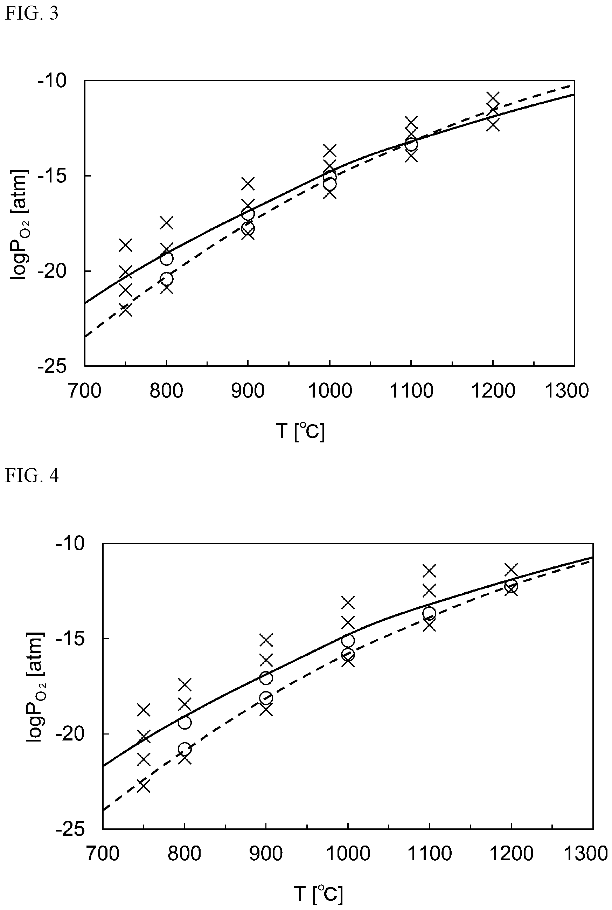

FIG. 3 shows the results in Table 3 in the form of a graph, in which the relationship between the temperature T and the oxygen partial pressure $logP_{O2}$ during the treatment is plotted. In this graph, the case satisfying both that the metallization ratio is 75 mass% or more and that the P/Fe value in the metal phase is low is indicated by a circle (O), and the case satisfying either that the metallization ratio is low or that the P/Fe value in the metal phase is high is indicated by a cross mark (X). As can be seen from FIG. 3, when the temperature T for the high-temperature reduction is set higher than 750°C but lower than 1200°C, a high metallization ratio and low P/Fe value in the metal phase are achieved in a region below the solid line indicating the relationship between the treatment temperature T and the oxygen partial pressure $logP_{O2}$ in FIG. 3 but above the broken line indicating the relationship between the treatment temperature T and the oxygen partial pressure $logP_{O2}$ in FIG. 3. This was the same as Relational Expression A shown in FIG. 2 of Example 1. That is, regardless of whether CO-containing gas or $H_2$-containing gas is used as the gas for reduction, it is possible to produce reduced iron with a low phosphorus concentration by reducing iron ore at the treatment temperature T and the oxygen partial pressure $logP_{O2}$ within the ranges that satisfy Relational Expression A.

(Example 3)

The iron ore B powder shown in Table 1 was mixed and granulated with quicklime as the CaO source, and a reduction treatment was conducted using equipment and a method similar to those in Example 1. A method used to calculate the oxygen partial pressure Poz was similar to that in Example 1. The amount of the quicklime added was adjusted so that the basicity ($W_{CaO}/W_{SiO2}$) on the mass basis of the CaO content to the $SiO_2$ content in the iron ore B became a predetermined value. The treated sample was crushed, and then magnetically separated to be analyzed as in Example 1. Tables 4 to 7 show the results when the basicity $W_{CaO}/W_{SiO2}$ was changed to 1.0, 2.0, 4.0, and 4.5, respectively.

[Table 4]

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $logP_{O2}$ | | Metallization ratio | P/Fe | |
| | | °C | Partial pressure ratio | atm | atm | mass% | mass% | % | |
| 53 | 1.0 | 800 | 3.0 | 3.93E-20 | -19.41 | 0.36 | 79 | 0.019 | Invention Example |
| 54 | 1.0 | 800 | 15 | 1.57E-21 | -20.80 | 0.38 | 81 | 0.020 | Invention Example |
| 55 | 1.0 | 900 | 3.0 | 8.44E-18 | -17.07 | 0.40 | 83 | 0.020 | Invention Example |
| 56 | 1.0 | 900 | 10 | 7.60E-19 | -18.12 | 0.45 | 86 | 0.020 | Invention Example |
| 57 | 1.0 | 1000 | 3.0 | 7.80E-16 | -15.11 | 0.46 | 87 | 0.021 | Invention Example |

(continued)

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $logP_{O2}$ | | Metallization ratio | P/Fe | |
| | | °C | Partial pressure ratio | atm | atm | mass% | mass% | % | |
| 58 | 1.0 | 1000 | 7.0 | 1.43E-16 | -15.84 | 0.48 | 88 | 0.021 | Invention Example |
| 59 | 1.0 | 1100 | 4.0 | 2.10E-14 | -13.68 | 0.52 | 90 | 0.022 | Invention Example |
| 60 | 1.0 | 1200 | 4.0 | 5.93E-13 | -12.23 | 0.52 | 90 | 0.022 | Invention Example |
| 61 | 1.0 | 750 | 0.3 | 1.81E-19 | -18.74 | 0.12 | 0 | - | Comparative Example |
| 62 | 1.0 | 800 | 0.3 | 3.93E-18 | -17.41 | 0.12 | 0 | - | Comparative Example |
| 63 | 1.0 | 900 | 0.3 | 8.44E-16 | -15.07 | 0.12 | 0 | - | Comparative Example |
| 64 | 1.0 | 1000 | 0.3 | 7.80E-14 | -13.11 | 0.12 | 0 | - | Comparative Example |
| 65 | 1.0 | 1100 | 0.3 | 3.73E-12 | -11.43 | 0.12 | 0 | - | Comparative Example |
| 66 | 1.0 | 1200 | 0.3 | 1.05E-10 | - 9.98 | 0.12 | 0 | - | Comparative Example |
| 67 | 1.0 | 750 | 1.5 | 7.24E-21 | -20.14 | 0.12 | 3 | 0.020 | Comparative Example |
| 68 | 1.0 | 800 | 1.0 | 3.54E-19 | -18.45 | 0.12 | 4 | 0.022 | Comparative Example |
| 69 | 1.0 | 900 | 1.0 | 7.60E-17 | -16.12 | 0.12 | 5 | 0.024 | Comparative Example |
| 70 | 1.0 | 1000 | 1.0 | 7.02E-15 | -14.15 | 0.12 | 5 | 0.025 | Comparative Example |
| 71 | 1.0 | 1100 | 1.0 | 3.36E-13 | -12.47 | 0.12 | 6 | 0.027 | Comparative Example |
| 72 | 1.0 | 1200 | 1.5 | 4.22E-12 | -11.38 | 0.12 | 7 | 0.029 | Comparative Example |
| 73 | 1.0 | 750 | 6.0 | 4.52E-22 | -21.34 | 0.09 | 78 | 0.165 | Comparative Example |
| 74 | 1.0 | 750 | 30 | 1.81E-23 | -22.74 | 0.08 | 92 | 0.161 | Comparative Example |
| 75 | 1.0 | 800 | 25 | 5.66E-22 | -21.25 | 0.08 | 92 | 0.162 | Comparative Example |
| 76 | 1.0 | 900 | 20 | 1.90E-19 | -18.72 | 0.07 | 93 | 0.164 | Comparative Example |

(continued)

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $logP_{O2}$ | | Metallization ratio | P/Fe | |
| | | °C | Partial pressure ratio | atm | atm | mass% | mass% | % | |
| 77 | 1.0 | 1000 | 10 | 7.02E-17 | -16.15 | 0.06 | 93 | 0.166 | Comparative Example |
| 78 | 1.0 | 1100 | 8.0 | 5.24E-15 | -14.28 | 0.06 | 94 | 0.165 | Comparative Example |
| 79 | 1.0 | 1200 | 5.0 | 3.80E-13 | -12.42 | 0.06 | 95 | 0.165 | Comparative Example |

[Table 5]

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $logP_{O2}$ | | Metallization ratio | P/Fe | |
| | | °C | Partial pressure ratio | atm | atm | mass% | mass% | % | |
| 80 | 2.0 | 800 | 3.0 | 3.93E-20 | -19.41 | 0.30 | 77 | 0.018 | Invention Example |
| 81 | 2.0 | 800 | 30 | 3.93E-22 | -21.41 | 0.31 | 79 | 0.019 | Invention Example |
| 82 | 2.0 | 900 | 3.5 | 6.20E-18 | -17.21 | 0.34 | 82 | 0.019 | Invention Example |
| 83 | 2.0 | 900 | 20 | 1.90E-19 | -18.72 | 0.36 | 84 | 0.019 | Invention Example |
| 84 | 2.0 | 1000 | 3.0 | 7.80E-16 | -15.11 | 0.37 | 85 | 0.020 | Invention Example |
| 85 | 2.0 | 1000 | 15 | 3.12E-17 | -16.51 | 0.39 | 87 | 0.020 | Invention Example |
| 86 | 2.0 | 1100 | 3.0 | 3.73E-14 | -13.43 | 0.40 | 88 | 0.021 | Invention Example |
| 87 | 2.0 | 1100 | 10 | 3.36E-15 | -14.47 | 0.40 | 88 | 0.021 | Invention Example |
| 88 | 2.0 | 1200 | 5.0 | 3.80E-13 | -12.42 | 0.41 | 89 | 0.021 | Invention Example |
| 89 | 2.0 | 750 | 0.4 | 1.02E-19 | -18.99 | 0.12 | 0 | - | Comparative Example |
| 90 | 2.0 | 800 | 0.4 | 2.21E-18 | -17.66 | 0.12 | 0 | - | Comparative Example |

(continued)

| No . | Basicity $W_{CaO}/W_{SiO2}$ | Temperature T | Gas composition $P_{CO}/P_{CO2}$ | Oxygen partial pressure | | Slag phase (P) | Metal phase | | Remarks |
|------|------|------|------|------|------|------|------|------|------|
| | | | | $P_{O2}$ | $logP_{O2}$ | | Metallization ratio | P/Fe | |
| | | °C | Partial pressure ratio | atm | atm | mass% | mass% | % | |
| 91 | 2.0 | 900 | 0.4 | 4.75E-16 | -15.32 | 0.12 | 0 | - | Comparative Example |
| 92 | 2.0 | 1000 | 0.4 | 4.39E-14 | -13.36 | 0.12 | 0 | - | Comparative Example |
| 93 | 2.0 | 1100 | 0.4 | 2.10E-12 | -11.68 | 0.12 | 0 | - | Comparative Example |
| 94 | 2.0 | 1200 | 0.4 | 5.93E-11 | -10.23 | 0.12 | 0 | - | Comparative Example |
| 95 | 2.0 | 750 | 1.0 | 1.63E-20 | -19.79 | 0.11 | 3 | 0.019 | Comparative Example |
| 96 | 2.0 | 800 | 1.0 | 3.54E-19 | -18.45 | 0.12 | 4 | 0.021 | Comparative Example |
| 97 | 2.0 | 900 | 1.5 | 3.38E-17 | -16.47 | 0.12 | 5 | 0.022 | Comparative Example |
| 98 | 2.0 | 1000 | 1.5 | 3.12E-15 | -14.51 | 0.12 | 5 | 0.024 | Comparative Example |
| 99 | 2.0 | 1100 | 2.0 | 8.39E-14 | -13.08 | 0.12 | 6 | 0.027 | Comparative Example |
| 100 | 2.0 | 1200 | 2.0 | 2.37E-12 | -11.62 | 0.12 | 7 | 0.030 | Comparative Example |
| 101 | 2.0 | 750 | 8.0 | 2.54E-22 | -21.59 | 0.08 | 80 | 0.165 | Comparative Example |
| 102 | 2.0 | 750 | 50 | 6.51E-24 | -23.19 | 0.06 | 95 | 0.161 | Comparative Example |
| 103 | 2.0 | 800 | 50 | 1.41E-22 | -21.85 | 0.05 | 95 | 0.162 | Comparative Example |
| 104 | 2.0 | 900 | 30 | 8.44E-20 | -19.07 | 0.04 | 96 | 0.164 | Comparative Example |
| 105 | 2.0 | 1000 | 20 | 1.76E-17 | -16.76 | 0.04 | 96 | 0.166 | Comparative Example |
| 106 | 2.0 | 1100 | 15 | 1.49E-15 | -14.83 | 0.04 | 97 | 0.165 | Comparative Example |
| 107 | 2.0 | 1200 | 10 | 9.49E-14 | -13.02 | 0.04 | 97 | 0.165 | Comparative Example |

[Table 6]

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $logP_{O2}$ | | Metallization ratio | P/Fe | |
| | | °C | Partial pressure ratio | atm | atm | mass% | mass% | % | |
| 108 | 4.0 | 800 | 3.5 | 2.89E-20 | -19.54 | 0.24 | 76 | 0.017 | Invention Example |
| 109 | 4.0 | 800 | 100 | 3.54E-23 | -22.45 | 0.24 | 77 | 0.018 | Invention Example |
| 110 | 4.0 | 900 | 3.5 | 6.20E-18 | -17.21 | 0.25 | 78 | 0.018 | Invention Example |
| 111 | 4.0 | 900 | 90 | 9.38E-21 | -20.03 | 0.26 | 80 | 0.018 | Invention Example |
| 112 | 4.0 | 1000 | 3.5 | 5.73E-16 | -15.24 | 0.26 | 81 | 0.019 | Invention Example |
| 113 | 4.0 | 1000 | 50 | 2.81E-18 | -17.55 | 0.27 | 83 | 0.019 | Invention Example |
| 114 | 4.0 | 1100 | 3.5 | 2.74E-14 | -13.56 | 0.28 | 85 | 0.020 | Invention Example |
| 115 | 4.0 | 1100 | 40 | 2.10E-16 | -15.68 | 0.28 | 85 | 0.020 | Invention Example |
| 116 | 4.0 | 1200 | 4.0 | 5.93E-13 | -12.23 | 0.28 | 85 | 0.020 | Invention Example |
| 117 | 4.0 | 1200 | 30 | 1.05E-14 | -13.98 | 0.29 | 86 | 0.020 | Invention Example |
| 118 | 4.0 | 750 | 0.5 | 6.51E-20 | -19.19 | 0.12 | 0 | - | Comparative Example |
| 119 | 4.0 | 800 | 0.5 | 1.41E-18 | -17.85 | 0.12 | 0 | - | Comparative Example |
| 120 | 4.0 | 900 | 0.5 | 3.04E-16 | -15.52 | 0.12 | 0 | - | Comparative Example |
| 121 | 4.0 | 1000 | 0.5 | 2.81E-14 | -13.55 | 0.12 | 0 | - | Comparative Example |
| 122 | 4.0 | 1100 | 0.5 | 1.34E-12 | -11.87 | 0.12 | 0 | - | Comparative Example |
| 123 | 4.0 | 1200 | 0.5 | 3.80E-11 | -10.42 | 0.12 | 0 | - | Comparative Example |
| 124 | 4.0 | 750 | 1.5 | 7.24E-21 | -20.14 | 0.11 | 3 | 0.019 | Comparative Example |
| 125 | 4.0 | 800 | 1.5 | 1.57E-19 | -18.80 | 0.11 | 4 | 0.020 | Comparative Example |
| 126 | 4.0 | 900 | 1.5 | 3.38E-17 | -16.47 | 0.11 | 5 | 0.022 | Comparative Example |

(continued)

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $log P_{O2}$ | | Metallization ratio | P/Fe | |
| | | °C | Partial pressure ratio | atm | atm | mass% | mass% | % | |
| 127 | 4.0 | 1000 | 1.5 | 3.12E-15 | -14.51 | 0.11 | 5 | 0.025 | Comparative Example |
| 128 | 4.0 | 1100 | 2.0 | 8.39E-14 | -13.08 | 0.11 | 6 | 0.027 | Comparative Example |
| 129 | 4.0 | 1200 | 2.0 | 2.37E-12 | -11.62 | 0.11 | 7 | 0.030 | Comparative Example |
| 130 | 4.0 | 750 | 8.0 | 2.54E-22 | -21.59 | 0.06 | 80 | 0.165 | Comparative Example |
| 131 | 4.0 | 750 | 200 | 4.07E-25 | -24.39 | 0.04 | 95 | 0.161 | Comparative Example |
| 132 | 4.0 | 800 | 150 | 1.57E-23 | -22.80 | 0.04 | 95 | 0.162 | Comparative Example |
| 133 | 4.0 | 900 | 120 | 5.28E-21 | -20.28 | 0.03 | 96 | 0.164 | Comparative Example |
| 134 | 4.0 | 1000 | 100 | 7.02E-19 | -18.15 | 0.03 | 96 | 0.166 | Comparative Example |
| 135 | 4.0 | 1100 | 60 | 9.32E-17 | -16.03 | 0.02 | 97 | 0.165 | Comparative Example |
| 136 | 4.0 | 1200 | 40 | 5.93E-15 | -14.23 | 0.02 | 97 | 0.165 | Comparative Example |

[Table 7]

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $log P_{O2}$ | | Metallization ratio | P/Fe | |
| | | °C | Partial pressure ratio | atm | atm | mass% | mass% | % | |
| 137 | 4.5 | 800 | 3.5 | 2.89E-20 | -19.54 | 0.18 | 62 | 0.018 | Invention Example |
| 138 | 4.5 | 800 | 100 | 3.54E-23 | -22.45 | 0.19 | 63 | 0.019 | Invention Example |
| 139 | 4.5 | 900 | 3.5 | 6.20E-18 | -17.21 | 0.19 | 64 | 0.019 | Invention Example |
| 140 | 4.5 | 900 | 90 | 9.38E-21 | -20.03 | 0.19 | 65 | 0.019 | Invention Example |

(continued)

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $logP_{O2}$ | | Metallization ratio | P/Fe | |
| | | °C | Partial pressure ratio | atm | atm | mass% | mass% | % | |
| 141 | 4.5 | 1000 | 3.5 | 5.73E-16 | -15.24 | 0.20 | 67 | 0.020 | Invention Example |
| 142 | 4.5 | 1000 | 50 | 2.81E-18 | -17.55 | 0.20 | 69 | 0.020 | Invention Example |
| 143 | 4.5 | 1100 | 3.5 | 2.74E-14 | -13.56 | 0.20 | 70 | 0.021 | Invention Example |
| 144 | 4.5 | 1100 | 40 | 2.10E-16 | -15.68 | 0.21 | 71 | 0.021 | Invention Example |
| 145 | 4.5 | 1200 | 4.0 | 5.93E-13 | -12.23 | 0.21 | 71 | 0.021 | Invention Example |
| 146 | 4.5 | 1200 | 30 | 1.05E-14 | -13.98 | 0.21 | 71 | 0.021 | Invention Example |
| 147 | 4.5 | 750 | 0.5 | 6.51E-20 | -19.19 | 0.12 | 0 | - | Comparative Example |
| 148 | 4.5 | 800 | 0.5 | 1.41E-18 | -17.85 | 0.12 | 0 | - | Comparative Example |
| 149 | 4.5 | 900 | 0.5 | 3.04E-16 | -15.52 | 0.12 | 0 | - | Comparative Example |
| 150 | 4.5 | 1000 | 0.5 | 2.81E-14 | -13.55 | 0.12 | 0 | - | Comparative Example |
| 151 | 4.5 | 1100 | 0.5 | 1.34E-12 | -11.87 | 0.12 | 0 | - | Comparative Example |
| 152 | 4.5 | 1200 | 0.5 | 3.80E-11 | -10.42 | 0.12 | 0 | - | Comparative Example |
| 153 | 4.5 | 750 | 1.5 | 7.24E-21 | -20.14 | 0.10 | 3 | 0.020 | Comparative Example |
| 154 | 4.5 | 800 | 1.5 | 1.57E-19 | -18.80 | 0.10 | 4 | 0.021 | Comparative Example |
| 155 | 4.5 | 900 | 1.5 | 3.38E-17 | -16.47 | 0.11 | 5 | 0.023 | Comparative Example |
| 156 | 4.5 | 1000 | 1.5 | 3.12E-15 | -14.51 | 0.11 | 5 | 0.026 | Comparative Example |
| 157 | 4.5 | 1100 | 2.0 | 8.39E-14 | -13.08 | 0.11 | 6 | 0.028 | Comparative Example |
| 158 | 4.5 | 1200 | 2.0 | 2.37E-12 | -11.62 | 0.11 | 7 | 0.031 | Comparative Example |
| 159 | 4.5 | 750 | 8.0 | 2.54E-22 | -21.59 | 0.07 | 68 | 0.165 | Comparative Example |

(continued)

| No. | Basicity $W_{CaO}/W_{SiO2}$ | Temperature T | Gas composition $P_{CO}/P_{CO2}$ | Oxygen partial pressure | | Slag phase (P) | Metal phase | | Remarks |
|---|---|---|---|---|---|---|---|---|---|
| | | | | $P_{O2}$ | $logP_{O2}$ | | Metallization ratio | P/Fe | |
| | | °C | Partial pressure ratio | atm | atm | mass% | mass% | % | |
| 160 | 4.5 | 750 | 300 | 1.81E-25 | -24.74 | 0.08 | 68 | 0.161 | Comparative Example |
| 161 | 4.5 | 800 | 200 | 8.84E-24 | -23.05 | 0.07 | 69 | 0.162 | Comparative Example |
| 162 | 4.5 | 900 | 150 | 3.38E-21 | -20.47 | 0.07 | 71 | 0.164 | Comparative Example |
| 163 | 4.5 | 1000 | 100 | 7.02E-19 | -18.15 | 0.07 | 73 | 0.166 | Comparative Example |
| 164 | 4.5 | 1100 | 60 | 9.32E-17 | -16.03 | 0.07 | 74 | 0.165 | Comparative Example |
| 165 | 4.5 | 1200 | 50 | 3.80E-15 | -14.42 | 0.07 | 74 | 0.165 | Comparative Example |

As can be seen from Tables 4 to 6, in the treatment No. 53 to 60, 80 to 88, and 108 to 117, the metallization ratio is as high as 75 mass% or more, and the P/Fe value of the metal phase is 0.022% or less, which is significantly reduced compared to the P/Fe value (0.169%) of the iron ore before the treatment. Meanwhile, in the treatment No. 61 to 66, 89 to 94, and 118 to 123, no magnetically attracted substance was obtained, and thus no metal phase was observed. In the treatment No. 67 to 72, 95 to 100, and 124 to 129, P/Fe in the metal phase is low while the metallization ratio is as low as 7 mass% at the maximum. This is considered because the proportion of carbon monoxide (CO) in the atmosphere during the treatment was too low to cause insufficient reduction of the iron oxide and phosphorus oxide in the raw material iron ore. In the treatment No. 73 to 79, 101 to 107, and 130 to 136, the metallization ratio is as high as 75 mass% or more while P/Fe in the metal phase is as high as 0.161% or more. This is considered because the proportion of carbon monoxide (CO) in the atmosphere during the treatment was high, and thus not only the iron oxide but also the phosphorus oxide in the raw material iron ore was reduced, and phosphorus resulting from the reduction was adsorbed onto the metallic iron produces.

As can be seen from Table 7, in the treatment No. 137 to 146, the metallization ratio is as high as 60 mass% or more, and the P/Fe value of the metal phase is 0.021% or less, which is significantly reduced compared to the P/Fe value (0.169%) of the iron ore before the treatment. However, the metallization ratio is lower than that in the treatment No. 53 to 60, 80 to 88, and 108 to 117. This is considered because as the basicity $W_{CaO}/W_{SiO2}$ of the raw material was increased, the activity of iron oxide in the iron ore decreased, resulting in decreased reduction efficiency. That is, to obtain a high metallization ratio, the basicity $W_{CaO}/W_{SiO2}$ of the raw material is preferably 4.0 or less. Meanwhile, regarding the treatment No. 147 to 152, no magnetically attracted substance was obtained, and thus no metal phase was confirmed. In the treatment No. 153 to 158, P/Fe in the metal phase is low, but the metallization ratio is as low as 7 mass% at the maximum. This is considered because the proportion of carbon monoxide (CO) in the atmosphere during the treatment was low, and thus iron oxide and phosphorus oxide in the raw material iron ore were not sufficiently reduced. In the treatment No. 159 to 165, the metallization ratio is as high as 65 mass% or more, but P/Fe in the metal phase is as high as 0.161% or more. This is considered because the proportion of carbon monoxide (CO) in the atmosphere during the treatment was high, and thus not only the iron oxide but also the phosphorus oxide in the raw material iron ore was reduced, and phosphorus resulting from the reduction was adsorbed onto the produced metallic iron.

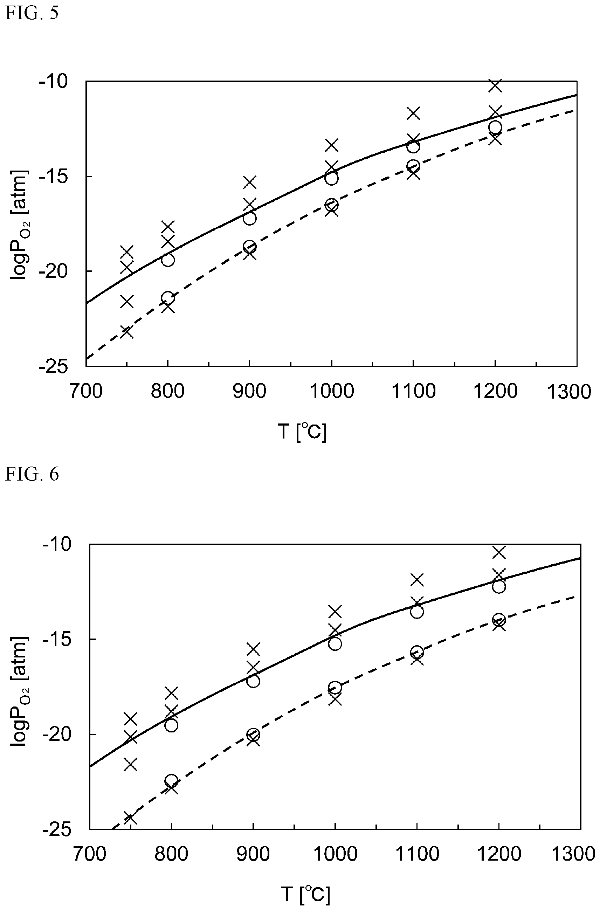

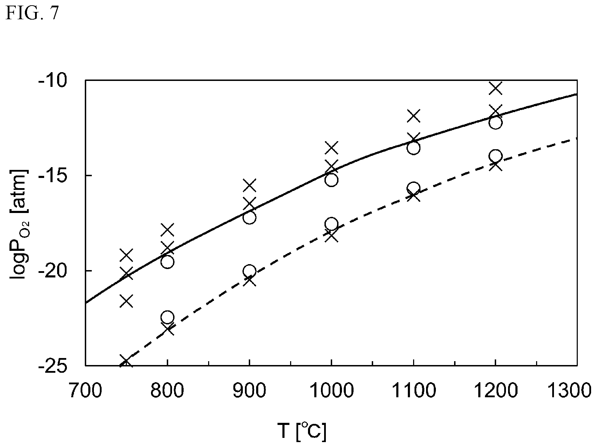

FIGs. 4 to 7 show the results in Tables 4 to 7 in the form of a graph, in which the relationship between the temperature T and the oxygen partial pressure $logP_{O2}$ during the treatment is plotted. In these graphs, the case satisfying both that the metallization ratio is 60 mass% or more and that the P/Fe value in the metal phase is low is indicated by a circle (O), and the case satisfying either that the metallization ratio is low or that the P/Fe value in the metal phase is high is indicated by a cross mark (X). As can be seen from each of FIGs. 4 to 7, when the temperature T used for the high-temperature reduction is set higher than 750°C but lower than or equal to 1200°C, a high metallization ratio and low P/Fe value in the metal phase are achieved in a region below the solid line indicating the relationship between the treatment temperature T and the oxygen partial pressure $\log P_{O2}$ in each graph but above the broken line indicating the relationship between the treatment temperature T and the oxygen partial pressure $\log P_{O2}$ in each graph. Herein, the position of the solid line in each graph does not change substantially, while the position of the broken line in the graph shifts downward as the basicity $W_{CaO}/W_{SiO2}$ of the raw material is higher. That is, it is possible to produce reduced iron with a low phosphorus concentration by reducing iron ore at the temperature T (°C) and the oxygen partial pressure Poz (atm) that satisfy the following Relational Expression B.

[Expression B]

$$-0.000018 \times T^2 + 0.0575 \times T - 55.0 - 0.6 \times W_{CaO}/W_{SiO2}$$

$$\leq \log P_{O2} \leq -0.000015 \times T^2 + 0.0481 \times T - 48.1$$

Herein, the basicity $W_{CaO}/W_{SiO2}$ of the raw material is the ratio, on a mass basis, of the CaO content ($W_{CaO}$) to the $SiO_2$ content ($W_{SiO2}$) in the raw material.

(Example 4)

Two tons of the reduced iron sample obtained in Example 1, and quicklime in an amount necessary to achieve a predetermined slag basicity determined on the basis of the analytical value of the reduced iron sample, were charged into an electric furnace with a heat size of 3 tons and a transformer capacity of 1200 kVA. The mixture was then melted with a current passed through an arc electrode, and the current was stopped when the temperature of the molten iron had reached 1630°C, and the slag was then removed through a slag removal port. The molten iron in the electric furnace was sampled and chemically analyzed. Table 8 shows the experimental conditions and the obtained analysis values. In the reduction treatment No. 8 to 19, no magnetically attracted substance was obtained, or the amount of a magnetically attracted substance obtained was too small to be subjected to melting treatment. The slag basicity in Table 8 shows the mass ratio of the CaO content to the $SiO_2$ content in the produced slag. The P concentration in the molten iron is represented by [P].

[Table 8]

| No. | Reduction treatment No. | Slag phase (P) | Metal phase | | Slag basicity | Molten iron [P] | Slag removal | Remarks |
| | | | Metallization ratio | P/Fe | | | | |
| | | mass% | mass% | % | Mass ratio | mass% | | |
| S01 | 1 | 0.45 | 81 | 0.020 | 1.5 | 0.020 | Removal | Invention Example |
| S02 | 1 | 0.45 | 81 | 0.020 | 2.5 | 0.020 | Removal | Invention Example |
| S03 | 1 | 0.45 | 81 | 0.020 | 4.0 | 0.019 | Removal | Invention Example |
| S04 | 2 | 0.50 | 84 | 0.021 | 1.5 | 0.021 | Removal | Invention Example |
| S05 | 2 | 0.50 | 84 | 0.021 | 2.5 | 0.021 | Removal | Invention Example |
| S06 | 2 | 0.50 | 84 | 0.021 | 4.0 | 0.021 | Removal | Invention Example |
| S07 | 3 | 0.54 | 86 | 0.021 | 1.5 | 0.021 | Removal | Invention Example |

(continued)

| No. | Reduction treatment step | | | | Melting treatment step | | | Remarks |
| | Reduction treatment No. | Slag phase (P) | Metal phase | | Slag basicity | Molten iron [P] | Slag removal | |
| | | | Metallization ratio | P/Fe | | | | |
| | | mass% | mass% | % | Mass ratio | mass% | | |
| S08 | 3 | 0.54 | 86 | 0.021 | 2.5 | 0.021 | Removal | Invention Example |
| S09 | 3 | 0.54 | 86 | 0.021 | 4.0 | 0.020 | Removal | Invention Example |
| S10 | 4 | 0.62 | 89 | 0.021 | 1.5 | 0.021 | Removal | Invention Example |
| S11 | 4 | 0.62 | 89 | 0.021 | 2.5 | 0.021 | Removal | Invention Example |
| S12 | 4 | 0.62 | 89 | 0.021 | 4.0 | 0.020 | Removal | Invention Example |
| S13 | 5 | 0.62 | 89 | 0.022 | 1.5 | 0.022 | Removal | Invention Example |
| S14 | 5 | 0.62 | 89 | 0.022 | 2.5 | 0.022 | Removal | Invention Example |
| S15 | 5 | 0.62 | 89 | 0.022 | 4.0 | 0.021 | Removal | Invention Example |
| S16 | 6 | 0.69 | 91 | 0.022 | 1.5 | 0.022 | Removal | Invention Example |
| S17 | 6 | 0.69 | 91 | 0.022 | 2.5 | 0.022 | Removal | Invention Example |
| S18 | 6 | 0.69 | 91 | 0.022 | 4.0 | 0.021 | Removal | Invention Example |
| S19 | 7 | 0.73 | 92 | 0.023 | 1.5 | 0.023 | Removal | Invention Example |
| S20 | 7 | 0.73 | 92 | 0.023 | 2.5 | 0.023 | Removal | Invention Example |
| S21 | 7 | 0.73 | 92 | 0.023 | 4.0 | 0.022 | Removal | Invention Example |
| S22 | 20 | 0.10 | 80 | 0.165 | 2.5 | 0.088 | Removal | Comparative Example |
| S23 | 21 | 0.10 | 95 | 0.161 | 2.5 | 0.088 | Removal | Comparative Example |
| S24 | 22 | 0.09 | 95 | 0.162 | 2.5 | 0.089 | Removal | Comparative Example |
| S25 | 23 | 0.08 | 96 | 0.164 | 2.5 | 0.090 | Removal | Comparative Example |
| S26 | 24 | 0.07 | 96 | 0.166 | 2.5 | 0.090 | Removal | Comparative Example |

(continued)

| No. | Reduction treatment No. | Reduction treatment step | | | Melting treatment step | | | Remarks |
|---|---|---|---|---|---|---|---|---|
| | | Slag phase (P) | Metal phase | | Slag basicity | Molten iron [P] | Slag removal | |
| | | | Metallization ratio | P/Fe | | | | |
| | | mass% | mass% | % | Mass ratio | mass% | | |
| S27 | 25 | 0.07 | 97 | 0.165 | 2.5 | 0.090 | Removal | Comparative Example |
| S28 | 26 | 0.07 | 97 | 0.165 | 2.5 | 0.089 | Removal | Comparative Example |
| S29 | 5 | 0.62 | 89 | 0.022 | 1.3 | 0.024 | Removal | Comparative Example |
| S30 | 5 | 0.62 | 89 | 0.022 | 4.1 | 0.022 | Not removal | Comparative Example |
| S31 | 6 | 0.69 | 91 | 0.022 | 1.3 | 0.024 | Removal | Comparative Example |
| S32 | 6 | 0.69 | 91 | 0.022 | 4.1 | 0.022 | Not removal | Comparative Example |

In the melting treatment No. S01 to S21 and S29 to S32 in Table 8, the necessary amount of the sample subjected to the reduction treatment under each condition in Example 1 was obtained and then subjected to melting treatment. As can be seen from Table 8, in the melting treatment No. S01 to S21, the melting treatment step was performed to achieve the slag basicity of 1.5 to 4.0, inclusive. This allowed the P concentration [P] in the molten iron to be less than or equal to the P/Fe value of the metal phase before the melting treatment, effectively suppressing the rephosphorization during the melting process. In the melting treatment No. S22 to S28, in which the melting treatment was performed to achieve a slag basicity of 2.5, the P concentration in the metallic iron was as high as 0.088 to 0.090 mass%, compared to that in the melting treatment No. S01 to S21. In the melting treatment No. S29 and S31, in which the melting treatment step was performed to achieve a slag basicity of 1.3, the P concentration [P] in the molten iron was higher than the P/Fe value of the metal phase before the melting treatment, causing rephosphorization during the melting treatment step. In the melting treatment No. S30 and S32, in which the melting treatment step was performed to achieve a slag basicity of 4.1, the slag contained many solid phases, so that the slag removal was incomplete due to insufficient separation of the molten iron from the slag after the melting treatment. The above results show that, by performing a melting treatment step to achieve a slag basicity of 1.5 to 4.0, reduced iron with a low phosphorus concentration can be melted without causing rephosphorization or failures in the slag removal, and thus molten iron with a low phosphorus concentration can be obtained.

(Example 5)

Each of the samples, which was obtained in Example 3 after the reduction treatment shown in Tables 4 to 6, was subjected to melting treatment in an electric furnace as in Example 4. Then, the completely melted molten iron was sampled and analyzed. The experimental conditions and the obtained analysis values are summarized in Tables 9 to 11. Note that in the reduction treatment No. 61 to 72, 89 to 100, and 118 to 129 in Tables 4 to 6, no magnetically attracted substance was obtained, or the amount of the magnetically attracted substance obtained was too small to be subjected to melting treatment.

[Table 9]

| No. | Reduction treatment step | | | | Melting treatment ste | | | Remarks |
|---|---|---|---|---|---|---|---|---|
| | Reduction treatment No. | Slag phase (P) | Metal phase | | Slag basicity | Molten iron [P] | Slag removal | |
| | | | Metallization ratio | P/Fe | | | | |
| | | mass% | mass% | % | Mass ratio | mass% | | |
| S33 | 53 | 0.36 | 79 | 0.019 | 1.5 | 0.018 | Removal | Invention Example |
| S34 | 53 | 0.36 | 79 | 0.019 | 2.5 | 0.017 | Removal | Invention Example |
| S35 | 53 | 0.36 | 79 | 0.019 | 4.0 | 0.016 | Removal | Invention Example |
| S36 | 54 | 0.38 | 81 | 0.020 | 1.5 | 0.019 | Removal | Invention Example |
| S37 | 54 | 0.38 | 81 | 0.020 | 2.5 | 0.018 | Removal | Invention Example |
| S38 | 54 | 0.38 | 81 | 0.020 | 4.0 | 0.017 | Removal | Invention Example |
| S39 | 55 | 0.40 | 83 | 0.020 | 1.5 | 0.019 | Removal | Invention Example |
| S40 | 55 | 0.40 | 83 | 0.020 | 2.5 | 0.018 | Removal | Invention Example |
| S41 | 55 | 0.40 | 83 | 0.020 | 4.0 | 0.017 | Removal | Invention Example |
| S42 | 56 | 0.45 | 86 | 0.020 | 1.5 | 0.019 | Removal | Invention Example |
| S43 | 56 | 0.45 | 86 | 0.020 | 2.5 | 0.017 | Removal | Invention Example |
| S44 | 56 | 0.45 | 86 | 0.020 | 4.0 | 0.016 | Removal | Invention Example |
| S45 | 57 | 0.46 | 87 | 0.021 | 1.5 | 0.019 | Removal | Invention Example |
| S46 | 57 | 0.46 | 87 | 0.021 | 2.5 | 0.017 | Removal | Invention Example |
| S47 | 57 | 0.46 | 87 | 0.021 | 4.0 | 0.016 | Removal | Invention Example |
| S48 | 58 | 0.48 | 88 | 0.021 | 1.5 | 0.019 | Removal | Invention Example |
| S49 | 58 | 0.48 | 88 | 0.021 | 2.5 | 0.018 | Removal | Invention Example |
| S50 | 58 | 0.48 | 88 | 0.021 | 4.0 | 0.017 | Removal | Invention Example |
| S51 | 59 | 0.52 | 90 | 0.022 | 1.5 | 0.020 | Removal | Invention Example |
| S52 | 59 | 0.52 | 90 | 0.022 | 2.5 | 0.019 | Removal | Invention Example |

(continued)

| No. | Reduction treatment step | | | | Melting treatment ste | | | Remarks |
| | Reduction treatment No. | Slag phase (P) | Metal phase | | Slag basicity | Molten iron [P] | Slag removal | |
| | | | Metallization ratio | P/Fe | | | | |
| | | mass% | mass% | % | Mass ratio | mass% | | |
| S53 | 59 | 0.52 | 90 | 0.022 | 4.0 | 0.018 | Removal | Invention Example |
| S54 | 60 | 0.52 | 90 | 0.022 | 1.5 | 0.020 | Removal | Invention Example |
| S55 | 60 | 0.52 | 90 | 0.022 | 2.5 | 0.019 | Removal | Invention Example |
| S56 | 60 | 0.52 | 90 | 0.022 | 4.0 | 0.018 | Removal | Invention Example |
| S57 | 73 | 0.09 | 78 | 0.165 | 2.5 | 0.090 | Removal | Comparative Example |
| S58 | 74 | 0.08 | 92 | 0.161 | 2.5 | 0.088 | Removal | Comparative Example |
| S59 | 75 | 0.08 | 92 | 0.162 | 2.5 | 0.088 | Removal | Comparative Example |
| S60 | 76 | 0.07 | 93 | 0.164 | 2.5 | 0.089 | Removal | Comparative Example |
| S61 | 77 | 0.06 | 93 | 0.166 | 2.5 | 0.089 | Removal | Comparative Example |
| S62 | 78 | 0.06 | 94 | 0.165 | 2.5 | 0.089 | Removal | Comparative Example |
| S63 | 79 | 0.06 | 95 | 0.165 | 2.5 | 0.089 | Removal | Comparative Example |
| S64 | 57 | 0.46 | 87 | 0.021 | 4.1 | 0.020 | Not removal | Comparative Example |
| S65 | 58 | 0.48 | 88 | 0.021 | 4.1 | 0.020 | Not removal | Comparative Example |

[Table 10]

| No. | Reduction treatment step | | | | Melting treatment ste | | | Remarks |
| | Reduction treatment No. | Slag phase (P) | Metal phase | | Slag basicity | Molten iron [P] | Slag removal | |
| | | | Metallization ratio | P/Fe | | | | |
| | | mass% | mass% | % | Mass ratio | mass% | | |
| S66 | 80 | 0.30 | 77 | 0.018 | 2.5 | 0.016 | Removal | Invention Example |
| S67 | 80 | 0.30 | 77 | 0.018 | 4.0 | 0.015 | Removal | Invention Example |

(continued)

| No. | Reduction treatment step | | | | Melting treatment ste | | | Remarks |
| | Reduction treatment No. | Slag phase (P) | Metal phase | | Slag basicity | Molten iron [P] | Slag removal | |
| | | | Metallization ratio | P/Fe | | | | |
| | | mass% | mass% | % | Mass ratio | mass% | | |
| S68 | 81 | 0.31 | 79 | 0.019 | 2.5 | 0.017 | Removal | Invention Example |
| S69 | 81 | 0.31 | 79 | 0.019 | 4.0 | 0.016 | Removal | Invention Example |
| S70 | 82 | 0.34 | 82 | 0.019 | 2.5 | 0.017 | Removal | Invention Example |
| S71 | 82 | 0.34 | 82 | 0.019 | 4.0 | 0.016 | Removal | Invention Example |
| S72 | 83 | 0.36 | 84 | 0.019 | 2.5 | 0.017 | Removal | Invention Example |
| S73 | 83 | 0.36 | 84 | 0.019 | 4.0 | 0.016 | Removal | Invention Example |
| S74 | 84 | 0.37 | 85 | 0.020 | 2.5 | 0.017 | Removal | Invention Example |
| S75 | 84 | 0.37 | 85 | 0.020 | 4.0 | 0.016 | Removal | Invention Example |
| S76 | 85 | 0.39 | 87 | 0.020 | 2.5 | 0.017 | Removal | Invention Example |
| S77 | 85 | 0.39 | 87 | 0.020 | 4.0 | 0.015 | Removal | Invention Example |
| S78 | 86 | 0.40 | 88 | 0.021 | 2.5 | 0.018 | Removal | Invention Example |
| S79 | 86 | 0.40 | 88 | 0.021 | 4.0 | 0.017 | Removal | Invention Example |
| S80 | 87 | 0.40 | 88 | 0.021 | 2.5 | 0.018 | Removal | Invention Example |
| S81 | 87 | 0.40 | 88 | 0.021 | 4.0 | 0.017 | Removal | Invention Example |
| S82 | 88 | 0.41 | 89 | 0.021 | 2.5 | 0.018 | Removal | Invention Example |
| S83 | 88 | 0.41 | 89 | 0.021 | 4.0 | 0.016 | Removal | Invention Example |
| S84 | 101 | 0.08 | 80 | 0.165 | 2.5 | 0.090 | Removal | Invention Example |
| S85 | 102 | 0.06 | 95 | 0.161 | 2.5 | 0.088 | Removal | Invention Example |
| S86 | 103 | 0.05 | 95 | 0.162 | 2.5 | 0.088 | Removal | Invention Example |

(continued)

| No. | Reduction treatment No. | Reduction treatment step | | | Melting treatment ste | | Slag removal | Remarks |
|---|---|---|---|---|---|---|---|---|
| | | Slag phase (P) | Metal phase | | Slag basicity | Molten iron [P] | | |
| | | | Metallization ratio | P/Fe | | | | |
| | | mass% | mass% | % | Mass ratio | mass% | | |
| S87 | 104 | 0.04 | 96 | 0.164 | 2.5 | 0.088 | Removal | Comparative Example |
| S88 | 105 | 0.04 | 96 | 0.166 | 2.5 | 0.089 | Removal | Comparative Example |
| S89 | 106 | 0.04 | 97 | 0.165 | 2.5 | 0.089 | Removal | Comparative Example |
| S90 | 107 | 0.04 | 97 | 0.165 | 2.5 | 0.090 | Removal | Comparative Example |
| S91 | 84 | 0.37 | 85 | 0.020 | 4.1 | 0.018 | Not removal | Comparative Example |
| S92 | 85 | 0.39 | 87 | 0.020 | 4.1 | 0.018 | Not removal | Comparative Example |

[Table 11]

| No . | Reduction treatment No. | Reduction treatment step | | | Melting treatment step | | Slag removal | Remarks |
|---|---|---|---|---|---|---|---|---|
| | | Slag phase (P) | Metal phase | | Slag basicity | Molten iron [P] | | |
| | | | Metallization ratio | P/Fe | | | | |
| | | mass% | mass% | % | Mass ratio | mass% | | |
| S93 | 108 | 0.24 | 76 | 0.017 | 4.0 | 0.014 | Removal | Invention Example |
| S94 | 109 | 0.24 | 77 | 0.018 | 4.0 | 0.015 | Removal | Invention Example |
| S95 | 110 | 0.25 | 78 | 0.018 | 4.0 | 0.015 | Removal | Invention Example |
| S96 | 111 | 0.26 | 80 | 0.018 | 4.0 | 0.015 | Removal | Invention Example |
| S97 | 112 | 0.26 | 81 | 0.019 | 4.0 | 0.016 | Removal | Invention Example |
| S98 | 113 | 0.27 | 83 | 0.019 | 4.0 | 0.015 | Removal | Invention Example |
| S99 | 114 | 0.28 | 85 | 0.020 | 4.0 | 0.017 | Removal | Invention Example |
| S100 | 115 | 0.28 | 85 | 0.020 | 4.0 | 0.017 | Removal | Invention Example |
| S101 | 116 | 0.28 | 85 | 0.020 | 4.0 | 0.016 | Removal | Invention Example |

(continued)

| No . | Reduction treatment No. | Reduction treatment step | | | Melting treatment step | | | Remarks |
| | | Slag phase (P) | Metal phase | | Slag basicity | Molten iron [P] | Slag removal | |
| | | | Metallization ratio | P/Fe | | | | |
| | | mass% | mass% | % | Mass ratio | mass% | | |
| S102 | 117 | 0.29 | 86 | 0.020 | 4.0 | 0.016 | Removal | Invention Example |
| S103 | 130 | 0.06 | 80 | 0.165 | 4.0 | 0.091 | Removal | Comparative Example |
| S104 | 131 | 0.04 | 95 | 0.161 | 4.0 | 0.089 | Removal | Comparative Example |
| S105 | 132 | 0.04 | 95 | 0.162 | 4.0 | 0.089 | Removal | Comparative Example |
| S106 | 133 | 0.03 | 96 | 0.164 | 4.0 | 0.090 | Removal | Comparative Example |
| S107 | 134 | 0.03 | 96 | 0.166 | 4.0 | 0.090 | Removal | Comparative Example |
| S108 | 135 | 0.02 | 97 | 0.165 | 4.0 | 0.090 | Removal | Comparative Example |
| S109 | 136 | 0.02 | 97 | 0.165 | 4.0 | 0.089 | Removal | Comparative Example |
| S110 | 112 | 0.26 | 81 | 0.019 | 4.1 | 0.017 | Not removal | Comparative Example |
| S111 | 113 | 0.27 | 83 | 0.019 | 4.1 | 0.017 | Not removal | Comparative Example |

As can be seen from Tables 9 to 11, in the melting treatment No. S33 to S56, S66 to S83, and S93 to S102 where the melting treatment step was performed to achieve a slag basicity of 1.5 to 4.0, inclusive, the P concentration [P] in the molten iron was less than or equal to the P/Fe value of the metal phase before the melting treatment. This could suppress the rephosphorization during the melting process. In the melting treatment No. S57 to S63, S84 to S90, and S103 to S109, the P/Fe value of the metal phase after the reduction treatment was as high as 0.161% or more, and the P concentration [P] in the molten iron after the melting treatment was 0.088 to 0.091 mass%, which was higher than that in the melting treatment No. S33 to S56, S66 to S83, and S93 to S102.

The results of Examples 4 and 5 can confirm that the basicity of the raw material is preferably set to 1.5 or more to prevent rephosphorization in the melting treatment and also improve the ability to retain phosphorus in the slag phase in the reduction treatment. In addition, the amount of the CaO source added in the melting treatment step can also be reduced. Meanwhile, from the perspective of the removability of the slag in the melting treatment step, the basicity of the raw material in the reduction treatment step is preferably suppressed to be less than or equal to 4.0.

(Example 6)

The reduced iron sample produced in Example 1 was charged into another rotary hearth furnace with a capacity of 5 tons per hour without undergoing crushing. Then, agglomeration treatment was performed by controlling the treatment temperature $T_2$ and the oxygen partial pressure $P_{O2}$ while adjusting the amounts of fuel gas and oxygen to be fed to a heating burner as well as their proportions. Natural gas was used as the fuel gas. The operating conditions for the equipment (rotary hearth furnace) were set to allow 120 minutes from the charging to discharging of the sample, and then temperature measurement and gas composition analysis were performed at a place where the sample was present after 60 minutes had elapsed. The concentrations of carbon monoxide (CO) and carbon dioxide ($CO_2$) in the collected gas were measured with an infrared gas analyzer. The oxygen partial pressure Poz in the agglomeration treatment was set equal to the oxygen partial pressure Poz in the reduction treatment at the agglomeration treatment temperature. For the oxidation-reduction reaction represented by the reaction (c) indicated by Chemical Formula 3, the oxygen partial pressure Poz was calculated from the measured value of the ratio $P_{CO}/P_{CO2}$ of the respective partial pressures based on Expressions (1) and (2).

The condition No. T1 to T21 in Table 12 show the phosphorus removal ratio $\Delta P=100-[\{$(the weight of the reduced iron recovered by dry magnetic separation) $\times$ (the P concentration in the reduced iron recovered by dry magnetic separation)$\}/$ f (the weight of the mixture) $\times$ (the P concentration in the mixture)$\}] \times 100(\%)$, the metallization ratio = $[\{$(the weight of the reduced iron recovered by dry magnetic separation) $\times$ (the iron concentration in the reduced iron recovered by dry magnetic separation)$\}/$ f (the weight of the mixture) $\times$ (the iron concentration in the mixture)$\}] \times 100$ (mass%), the melt formation temperature Tm, s of the slag ingredient, and the melting temperature Tm, m of metallic iron when the temperature and gas composition conditions for the reduction treatment were changed. Herein, the melt formation temperature Tm, s of the slag ingredient is the value determined by the method MS3, and the melting temperature Tm, m of the metallic iron is the value determined by the method MM1. The reduction treatment No. in Table 12 represents the treatment No. in Table 2. In addition, a condition where the treatment temperature $T_2$ in the agglomeration step was lower than Tm, s is indicated by "Low" in the temperature evaluation field, a condition where the treatment temperature $T_2$ was higher than Tm, m is indicated by "High," and a condition where the treatment temperature $T_2$ was in the range of Tm, s to Tm, m is indicated by "Good."

The sample subjected to the agglomeration treatment was crushed with a rod mill for 30 minutes and then separated into metallic iron and a slag phase by a magnetic separation process. At that time, a case satisfying both that the analysis value of M.Fe in the metallic iron phase was 90 mass% or more and that the analysis value of M.Fe in the slag phase was 10 mass% or less was evaluated as "Good" in the separability evaluation field, and the other conditions were evaluated as "Poor."

[Table 12]

| No. | Reduction treatment No. | Reduction step | | | | | Agglomeration step | | |
| | | Slag phase (P) | Metal phase | | Tm, s | Tm, m | $T_2$ | Temperature evaluation | Separability evaluation |
| | | | Metallization ratio | P/Fe | | | | | |
| | | mass% | mass% | % | °C | °C | °C | | |
| T1 | 1 | 0.45 | 81 | 0.020 | 1126 | 1480 | 1120 | Low | Poor |
| T2 | 1 | 0.45 | 81 | 0.020 | 1126 | 1480 | 1130 | Good | Good |
| T3 | 1 | 0.45 | 81 | 0.020 | 1126 | 1480 | 1490 | High | Poor |
| T4 | 2 | 0.50 | 84 | 0.021 | 1128 | 1480 | 1120 | Low | Poor |
| T5 | 2 | 0.50 | 84 | 0.021 | 1128 | 1480 | 1130 | Good | Good |
| T6 | 2 | 0.50 | 84 | 0.021 | 1128 | 1480 | 1490 | High | Poor |
| T7 | 3 | 0.54 | 86 | 0.021 | 1135 | 1480 | 1130 | Low | Poor |
| T8 | 3 | 0.54 | 86 | 0.021 | 1135 | 1480 | 1140 | Good | Good |
| T9 | 3 | 0.54 | 86 | 0.021 | 1135 | 1480 | 1490 | High | Poor |
| T10 | 4 | 0.62 | 89 | 0.021 | 1136 | 1480 | 1130 | Low | Poor |
| T11 | 4 | 0.62 | 89 | 0.021 | 1136 | 1480 | 1140 | Good | Good |
| T12 | 4 | 0.62 | 89 | 0.021 | 1136 | 1480 | 1490 | High | Poor |
| T13 | 5 | 0.62 | 89 | 0.022 | 1144 | 1480 | 1140 | Low | Poor |
| T14 | 5 | 0.62 | 89 | 0.022 | 1144 | 1480 | 1150 | Good | Good |
| T15 | 5 | 0.62 | 89 | 0.022 | 1144 | 1480 | 1490 | High | Poor |
| T16 | 6 | 0.69 | 91 | 0.022 | 1144 | 1480 | 1140 | Low | Poor |
| T17 | 6 | 0.69 | 91 | 0.022 | 1144 | 1480 | 1150 | Good | Good |
| T18 | 6 | 0.69 | 91 | 0.022 | 1144 | 1480 | 1490 | High | Poor |
| T19 | 7 | 0.73 | 92 | 0.023 | 1153 | 1480 | 1150 | Low | Poor |

(continued)

| No. | Reduction treatment No. | Slag phase (P) | Metal phase | | Tm, s | Tm, m | T₂ | Temperature evaluation | Separability evaluation |
|---|---|---|---|---|---|---|---|---|---|
| | | | Metallization ratio | P/Fe | | | | | |
| | | mass% | mass% | % | °C | °C | °C | | |
| T20 | 7 | 0.73 | 92 | 0.023 | 1153 | 1480 | 1160 | Good | Good |
| T21 | 7 | 0.73 | 92 | 0.023 | 1153 | 1480 | 1490 | High | Poor |

(Example 7)

Reduction treatment was performed by varying the basicity $W_{CaO}/W_{SiO2}$ to 1.5, 2.5, and 4.0 as in Example 3. The reduced iron sample was charged into another rotary hearth furnace with a capacity of 5 tons per hour without undergoing crushing. Then, agglomeration treatment was performed by controlling the treatment temperature $T_2$ and the oxygen partial pressure $P_{O2}$ while adjusting the amounts of fuel gas and oxygen fed to a heating burner as well as their proportions. Natural gas was used as the fuel gas. The operating conditions of the equipment (rotary hearth furnace) were adjusted to allow 120 minutes from the charging to the discharging of the sample, and then temperature measurement and gas composition analysis were performed at a position where the supplied sample was present after 60 minutes had elapsed. The concentrations of carbon monoxide (CO) and carbon dioxide ($CO_2$) in the collected gas were measured with an infrared gas analyzer. The oxygen partial pressure Poz for the agglomeration treatment was set equal to the oxygen partial pressure Poz for the reduction treatment at the agglomeration treatment temperature. For the oxidation-reduction reaction represented by the reaction (c) indicated by Chemical Formula 3, the oxygen partial pressure Poz was calculated from the measured value of the ratio $P_{CO}/P_{CO2}$ of the respective partial pressures based on Expressions (1) and (2).

The condition No. T22 to T105 in Tables 13 to 15 show the phosphorus removal ratio ΔP=100 - [{(the weight of the reduced iron recovered by dry magnetic separation) × (the P concentration in the reduced iron recovered by dry magnetic separation)} / {(the weight of the mixture)×(the P concentration in the mixture)}] × 100(%), the metallization ratio = [{(the weight of the reduced iron recovered by dry magnetic separation) × (the iron concentration in the reduced iron recovered by dry magnetic separation)} / {(the weight of the mixture)×(the iron concentration in the mixture)}] × 100 (mass%), the melt formation temperature Tm, s of the slag ingredient, and the melting temperature Tm, m of metallic iron when the basicity $W_{CaO}/W_{SiO2}$ and the temperature and gas composition conditions for the reduction treatment were changed. Herein, the melt formation temperature Tm, s of the slag ingredient is the value determined by the method MS3, and the melting temperature Tm, m of the metallic iron is the value determined by the method MM1. A condition where the treatment temperature $T_2$ in the agglomeration step was lower than Tm, s is indicated by "Low" in the temperature evaluation field, a condition where the treatment temperature $T_2$ was higher than Tm, m is indicated by "High," and a condition where the treatment temperature $T_2$ was in the range of Tm, s to Tm, m is indicated by "Good."

The sample subjected to the agglomeration treatment was crushed with a rod mill for 30 minutes and then separated into metallic iron and a slag phase by a magnetic separation process. At that time, a condition satisfying both that the analysis value of M.Fe in the metallic iron phase was 90 mass% or more and that the analysis value of M.Fe in the slag phase was 10 mass% or less was evaluated as "Good" in the separability evaluation field, and the other conditions were evaluated as "Poor."

The condition No. T22 to T105 in Tables 13 to 15 confirms that the agglomeration of the slag phase proceeds and the separability thus improves when the following Relational Expression [Expression 2] is satisfied.

[Expression 2]

$$T_2 \geq 37.3 \times W_{CaO}/W_{SiO2} + 0.12 \times T_1 - 1.58 \times \log P_{O2} + 1000$$

Here, $T_1$ is the temperature (°C) of the reduction treatment, Poz is the oxygen partial pressure (atm) during the reduction treatment, $W_{CaO}/W_{SiO2}$ is the ratio on a mass basis of the CaO content ($W_{CaO}$) to the $SiO_2$ content ($W_{SiO2}$) in the raw material, and $T_2$ is the temperature (°C) of the agglomeration treatment.

Note that Expression 2 is applicable to common compositions of iron ore illustrated in Table 1. Although Expression 2 is not directly applicable to low-grade iron ore with a low Fe content or to oxide with a high Fe content, such as dust or scale, generated in a steel mill, it is possible to derive an appropriate expression using a method similar to that in Example 7.

[Table 13]

| No. | Wcao/W SiO2 | $T_1$ | $P_{CO}/P_{CO2}$ | $\log P_{O2}$ | Slag phase (P) | Metal phase | | Tm, s | Tm, m | $T_2$ | Temperature evaluation | Separability evaluation |
|---|---|---|---|---|---|---|---|---|---|---|---|---|
| | | | | | | Metallization ratio | P/Fe | | | | | |
| | | | | | mass% | mass% | % | °C | °C | °C | | |
| T22 | 1.5 | 800 | 3.0 | -19.41 | 0.33 | 79 | 0.019 | 1183 | 1480 | 1180 | Low | Poor |
| T23 | 1.5 | 800 | 3.0 | -19.41 | 0.33 | 79 | 0.019 | 1183 | 1480 | 1190 | Good | Good |
| T24 | 1.5 | 800 | 3.0 | -19.41 | 0.33 | 79 | 0.019 | 1183 | 1480 | 1490 | High | Poor |
| T25 | 1.5 | 800 | 20 | -21.05 | 0.35 | 81 | 0.020 | 1185 | 1480 | 1180 | Low | Poor |
| T26 | 1.5 | 800 | 20 | -21.05 | 0.35 | 81 | 0.020 | 1185 | 1480 | 1190 | Good | Good |
| T27 | 1.5 | 800 | 20 | -21.05 | 0.35 | 81 | 0.020 | 1185 | 1480 | 1490 | High | Poor |
| T28 | 1.5 | 900 | 3.0 | -17.07 | 0.37 | 83 | 0.020 | 1191 | 1480 | 1190 | Low | Poor |
| T29 | 1.5 | 900 | 3.0 | -17.07 | 0.37 | 83 | 0.020 | 1191 | 1480 | 1200 | Good | Good |
| 130 | 1.5 | 900 | 3.0 | -17.07 | 0.37 | 83 | 0.020 | 1191 | 1480 | 1490 | High | Poor |
| T31 | 1.5 | 900 | 15 | -18.47 | 0.41 | 86 | 0.020 | 1193 | 1480 | 1190 | Low | Poor |
| T32 | 1.5 | 900 | 15 | -18.47 | 0.41 | 86 | 0.020 | 1193 | 1480 | 1200 | Good | Good |
| T33 | 1.5 | 900 | 15 | -18.47 | 0.41 | 86 | 0.020 | 1193 | 1480 | 1490 | High | Poor |
| T34 | 1.5 | 1000 | 3.0 | -15.11 | 0.42 | 87 | 0.021 | 1200 | 1480 | 1195 | Low | Poor |
| T35 | 1.5 | 1000 | 3.0 | -15.11 | 0.42 | 87 | 0.021 | 1200 | 1480 | 1205 | Good | Good |
| T36 | 1.5 | 1000 | 3.0 | -15.11 | 0.42 | 87 | 0.021 | 1200 | 1480 | 1490 | High | Poor |
| T37 | 1.5 | 1000 | 100 | -16.15 | 0.44 | 88 | 0.021 | 1201 | 1480 | 1195 | Low | Poor |
| T38 | 1.5 | 1000 | 100 | -16.15 | 0.44 | 88 | 0.021 | 1201 | 1480 | 1205 | Good | Good |
| T39 | 1.5 | 1000 | 100 | -16.15 | 0.44 | 88 | 0.021 | 1201 | 1480 | 1490 | High | Poor |
| T40 | 1.5 | 1100 | 3.0 | -13.43 | 0.47 | 90 | 0.022 | 1209 | 1480 | 1205 | Low | Poor |
| T41 | 1.5 | 1100 | 3.0 | -13.43 | 0.47 | 90 | 0.022 | 1209 | 1480 | 1215 | Good | Good |
| T42 | 1.5 | 1100 | 3.0 | -13.43 | 0.47 | 90 | 0.022 | 1209 | 1480 | 1490 | High | Poor |
| T43 | 1.5 | 1100 | 6.0 | -14.03 | 0.47 | 90 | 0.022 | 1210 | 1480 | 1205 | Low | Poor |

| No. | $W_{CaO}/W_{SiO2}$ | $T_1$ | $P_{CO}/P_{CO2}$ | $logP_{O2}$ | Slag phase (P) | Metal phase | | Tm, s | Tm, m | $T_2$ | Temperature evaluation | Separability evaluation |
|-----|------|------|------|------|------|------|------|------|------|------|------|------|
| | | | | | | Metallization ratio | P/Fe | | | | | |
| | | | | | mass% | mass% | % | °C | °C | °C | | |
| T44 | 1.5 | 1100 | 6.0 | -14.03 | 0.47 | 90 | 0.022 | 1210 | 1480 | 1215 | Good | Good |
| T45 | 1.5 | 1100 | 6.0 | -14.03 | 0.47 | 90 | 0.022 | 1210 | 1480 | 1490 | High | Poor |
| T46 | 1.5 | 1200 | 4.0 | -12.23 | 0.47 | 90 | 0.022 | 1219 | 1480 | 1215 | Low | Poor |
| T47 | 1.5 | 1200 | 4.0 | -12.23 | 0.47 | 90 | 0.022 | 1219 | 1480 | 1225 | Good | Good |
| T48 | 1.5 | 1200 | 4.0 | -12.23 | 0.47 | 90 | 0.022 | 1219 | 1480 | 1490 | High | Poor |

[Table 14]

| No. | Wcao/W SiO2 | T$_1$ | P$_{CO}$/P$_{CO2}$ | logP$_{O2}$ | Slag phase (P) | Metal phase | | Tm, s | Tm, m | T$_2$ | Temperature evaluation | Separability evaluation |
|---|---|---|---|---|---|---|---|---|---|---|---|---|
| | | | | | | Metallization ratio | P/Fe | | | | | |
| | | | | mass% | mass% | mass% | % | °C | °C | °C | | |
| T49 | 2.5 | 800 | 3.0 | -19.41 | 0.28 | 77 | 0.018 | 1220 | 1480 | 1215 | Low | Poor |
| T50 | 2.5 | 800 | 3.0 | -19.41 | 0.28 | 77 | 0.018 | 1220 | 1480 | 1225 | Good | Good |
| T51 | 2.5 | 800 | 3.0 | -19.41 | 0.28 | 77 | 0.018 | 1220 | 1480 | 1490 | High | Poor |
| T52 | 2.5 | 800 | 40 | -21.66 | 0.30 | 79 | 0.019 | 1223 | 1480 | 1220 | Low | Poor |
| T53 | 2.5 | 800 | 40 | -21.66 | 0.30 | 79 | 0.019 | 1223 | 1480 | 1230 | Good | Good |
| T54 | 2.5 | 800 | 40 | -21.66 | 0.30 | 79 | 0.019 | 1223 | 1480 | 1490 | High | Poor |
| T55 | 2.5 | 900 | 3.5 | -17.21 | 0.32 | 82 | 0.019 | 1228 | 1480 | 1225 | Low | Poor |
| T56 | 2.5 | 900 | 3.5 | -17.21 | 0.32 | 82 | 0.019 | 1228 | 1480 | 1235 | Good | Good |
| T57 | 2.5 | 900 | 3.5 | -17.21 | 0.32 | 82 | 0.019 | 1228 | 1480 | 1490 | High | Poor |
| T58 | 2.5 | 900 | 25 | -18.92 | 0.33 | 84 | 0.019 | 1231 | 1480 | 1225 | Low | Poor |
| T59 | 2.5 | 900 | 25 | -18.92 | 0.33 | 84 | 0.019 | 1231 | 1480 | 1235 | Good | Good |
| T60 | 2.5 | 900 | 25 | -18.92 | 0.33 | 84 | 0.019 | 1231 | 1480 | 1490 | High | Poor |
| T61 | 2.5 | 1000 | 3.0 | -15.11 | 0.34 | 85 | 0.020 | 1237 | 1480 | 1230 | Low | Poor |
| T62 | 2.5 | 1000 | 3.0 | -15.11 | 0.34 | 85 | 0.020 | 1237 | 1480 | 1245 | Good | Good |
| T63 | 2.5 | 1000 | 3.0 | -15.11 | 0.34 | 85 | 0.020 | 1237 | 1480 | 1490 | High | Poor |
| T64 | 2.5 | 1000 | 18 | -16.66 | 0.36 | 87 | 0.020 | 1240 | 1480 | 1235 | Low | Poor |
| T65 | 2.5 | 1000 | 18 | -16.66 | 0.36 | 87 | 0.020 | 1240 | 1480 | 1245 | Good | Good |
| T66 | 2.5 | 1000 | 18 | -16.66 | 0.36 | 87 | 0.020 | 1240 | 1480 | 1490 | High | Poor |
| T67 | 2.5 | 1100 | 3.0 | -13.43 | 0.37 | 88 | 0.021 | 1246 | 1480 | 1240 | Low | Poor |
| T68 | 2.5 | 1100 | 3.0 | -13.43 | 0.37 | 88 | 0.021 | 1246 | 1480 | 1250 | Good | Good |
| T69 | 2.5 | 1100 | 3.0 | -13.43 | 0.37 | 88 | 0.021 | 1246 | 1480 | 1490 | High | Poor |
| T70 | 2.5 | 1100 | 12 | -14.63 | 0.37 | 88 | 0.021 | 1248 | 1480 | 1245 | Low | Poor |

(continued)

| No. | Wcao/W SiO2 | $T_1$ | $P_{CO}/P_{CO2}$ | $logP_{O2}$ | Reduction step | | | | | Agglomeration step | | |
|---|---|---|---|---|---|---|---|---|---|---|---|---|
| | | | | | Slag phase (P) | Metal phase | | Tm, s | Tm, m | $T_2$ | Temperature evaluation | Separability evaluation |
| | | | | | | Metallization ratio | P/Fe | | | | | |
| | mass% | | | | mass% | mass% | % | °C | °C | °C | | |
| T71 | 2.5 | 1100 | 12 | -14.63 | 0.37 | 88 | 0.021 | 1248 | 1480 | 1255 | Good | Good |
| T72 | 2.5 | 1100 | 12 | -14.63 | 0.37 | 88 | 0.021 | 1248 | 1480 | 1490 | High | Poor |
| T73 | 2.5 | 1200 | 6.0 | -12.58 | 0.38 | 89 | 0.021 | 1257 | 1480 | 1250 | Low | Poor |
| T74 | 2.5 | 1200 | 6.0 | -12.58 | 0.38 | 89 | 0.021 | 1257 | 1480 | 1260 | Good | Good |
| T75 | 2.5 | 1200 | 6.0 | -12.58 | 0.38 | 89 | 0.021 | 1257 | 1480 | 1490 | High | Poor |

EP 4 421 190 A1

34

[Table 15]

| No. | $W_{CaO}/W_{SiO2}$ | T₁ | $P_{CO}/P_{CO2}$ | logP$_{O2}$ | Reduction step Slag phase (P) mass% | Metal phase Metallization ratio mass% | Metal phase P/Fe % | Tm, s °C | Tm, m °C | T₂ °C | Agglomeration step Temperature evaluation | Separability evaluation |
|---|---|---|---|---|---|---|---|---|---|---|---|---|
| T76 | 4.0 | 800 | 3.5 | -19.54 | 0.24 | 76 | 0.017 | 1276 | 1480 | 1270 | Low | Poor |
| T77 | 4.0 | 800 | 3.5 | -19.54 | 0.24 | 76 | 0.017 | 1276 | 1480 | 1280 | Good | Good |
| T78 | 4.0 | 800 | 3.5 | -19.54 | 0.24 | 76 | 0.017 | 1276 | 1480 | 1490 | High | Poor |
| T79 | 4.0 | 800 | 100 | -22.45 | 0.24 | 77 | 0.018 | 1281 | 1480 | 1275 | Low | Poor |
| T80 | 4.0 | 800 | 100 | -22.45 | 0.24 | 77 | 0.018 | 1281 | 1480 | 1285 | Good | Good |
| T81 | 4.0 | 800 | 100 | -22.45 | 0.24 | 77 | 0.018 | 1281 | 1480 | 1490 | High | Poor |
| T82 | 4.0 | 900 | 3.5 | -17.21 | 0.25 | 78 | 0.018 | 1284 | 1480 | 1280 | Low | Poor |
| T83 | 4.0 | 900 | 3.5 | -17.21 | 0.25 | 78 | 0.018 | 1284 | 1480 | 1290 | Good | Good |
| T84 | 4.0 | 900 | 3.5 | -17.21 | 0.25 | 78 | 0.018 | 1284 | 1480 | 1490 | High | Poor |
| T85 | 4.0 | 900 | 90 | -20.03 | 0.26 | 80 | 0.018 | 1289 | 1480 | 1285 | Low | Poor |
| T86 | 4.0 | 900 | 90 | -20.03 | 0.26 | 80 | 0.018 | 1289 | 1480 | 1295 | Good | Good |
| T87 | 4.0 | 900 | 90 | -20.03 | 0.26 | 80 | 0.018 | 1289 | 1480 | 1490 | High | Poor |
| T88 | 4.0 | 1000 | 3.5 | -15.24 | 0.26 | 81 | 0.019 | 1293 | 1480 | 1290 | Low | Poor |
| T89 | 4.0 | 1000 | 3.5 | -15.24 | 0.26 | 81 | 0.019 | 1293 | 1480 | 1300 | Good | Good |
| T90 | 4.0 | 1000 | 3.5 | -15.24 | 0.26 | 81 | 0.019 | 1293 | 1480 | 1490 | High | Poor |
| T91 | 4.0 | 1000 | 50 | -17.55 | 0.27 | 83 | 0.019 | 1297 | 1480 | 1290 | Low | Poor |
| T82 | 4.0 | 1000 | 50 | -17.55 | 0.27 | 83 | 0.019 | 1297 | 1480 | 1305 | Good | Good |
| T93 | 4.0 | 1000 | 50 | -17.55 | 0.27 | 83 | 0.019 | 1297 | 1480 | 1490 | High | Poor |
| T94 | 4.0 | 1100 | 3.5 | -13.56 | 0.28 | 85 | 0.020 | 1303 | 1480 | 1295 | Low | Poor |
| T95 | 4.0 | 1100 | 3.5 | -13.56 | 0.28 | 85 | 0.020 | 1303 | 1480 | 1310 | Good | Good |
| T96 | 4.0 | 1100 | 3.5 | -13.56 | 0.28 | 85 | 0.020 | 1303 | 1480 | 1490 | High | Poor |
| T97 | 4.0 | 1100 | 40 | -15.68 | 0.28 | 85 | 0.020 | 1306 | 1480 | 1300 | Low | Poor |

| No. | $W_{Cao}/W_{SiO2}$ | $T_1$ | $P_{CO}/P_{CO2}$ | $logP_{O2}$ | Slag phase (P) | Metal phase | | Tm, s | Tm, m | $T_2$ | Temperature evaluation | Separability evaluation |
|---|---|---|---|---|---|---|---|---|---|---|---|---|
| | | | | | | Metallization ratio | P/Fe | | | | | |
| | | | | | mass% | mass% | % | °C | °C | °C | | |
| T98 | 4.0 | 1100 | 40 | -15.68 | 0.28 | 85 | 0.020 | 1306 | 1480 | 1310 | Good | Good |
| T99 | 4.0 | 1100 | 40 | -15.68 | 0.28 | 85 | 0.020 | 1306 | 1480 | 1490 | High | Poor |
| T100 | 4.0 | 1200 | 4.0 | -12.23 | 0.28 | 85 | 0.020 | 1313 | 1480 | 1305 | Low | Poor |
| T101 | 4.0 | 1200 | 4.0 | -12.23 | 0.28 | 85 | 0.020 | 1313 | 1480 | 1320 | Good | Good |
| T102 | 4.0 | 1200 | 4.0 | -12.23 | 0.28 | 85 | 0.020 | 1313 | 1480 | 1490 | High | Poor |
| T103 | 4.0 | 1200 | 30 | -13.98 | 0.29 | 86 | 0.020 | 1315 | 1480 | 1310 | Low | Poor |
| T104 | 4.0 | 1200 | 30 | -13.98 | 0.29 | 86 | 0.020 | 1315 | 1480 | 1320 | Good | Good |
| T105 | 4.0 | 1200 | 30 | -13.98 | 0.29 | 86 | 0.020 | 1315 | 1480 | 1490 | High | Poor |

(Reduction step spans: $W_{Cao}/W_{SiO2}$, $T_1$, $P_{CO}/P_{CO2}$, $logP_{O2}$, Slag phase (P), Metal phase, Tm, s, Tm, m. Agglomeration step spans: $T_2$, Temperature evaluation, Separability evaluation.)

EP 4 421 190 A1

Industrial Applicability

According to the method for producing metallic iron of the present invention, it is possible to produce metallic iron with a low phosphorus concentration from a raw material containing iron oxide and phosphorus as ingredients. Thus, it is possible to reduce the usage of a refining agent in a steel refining process for producing a steel product from the obtained metallic iron. Besides, the present invention also contributes to reducing $CO_2$ emissions, which is industrially advantageous. The method of the present invention is based on the technical idea of distributing compounds with different reducing conditions to a metal phase and a slag phase, and thus is applicable to a combination of such elements, and thus to refining therefor.

**Claims**

1.  A method for producing metallic iron,
    **characterized in that**
    the method comprises a high-temperature reduction step of heating a raw material containing oxide that includes iron oxide and phosphorus, as ingredients, under a reducing gas atmosphere to produce metallic iron resulting from reduction of the iron oxide and a slag phase formed of an unreduced portion of the oxide, and to cause the slag phase to contain the phosphorus.

2.  The method for producing metallic iron according to claim 1, wherein
    the raw material is iron ore, or ingredient-adjusting-material-added iron ore obtained by adding and mixing an ingredient-adjusting material to iron ore.

3.  The method for producing metallic iron according to claim 1 or 2, wherein
    a temperature and an oxygen partial pressure in the high-temperature reduction step are within a range that allows the iron oxide in the raw material to be thermodynamically stable as metallic iron and also within a range that allows the phosphorus in the raw material to be thermodynamically stable as phosphorus oxide contained in the slag phase.

4.  The method for producing metallic iron according to any one of claims 1 to 3, wherein
    $W_{CaO}/W_{SiO2}$, which is the mass ratio of a CaO content $W_{CaO}$ to a $SiO_2$ content $W_{SiO2}$ in the raw material, is 4.0 or less.

5.  The method for producing metallic iron according to claim 4, wherein
    in the high-temperature reduction step, a temperature T is in a range higher than 750°C but not higher than 1200°C, and an oxygen partial pressure Poz (atm) satisfies a condition of the following relational expression [Expression 1]:

    $-0.000018 \times T^2 + 0.0575 \times T - 55.0 - 0.6 \times W_{CaO}/W_{SiO2} \leq logP_{O2} \leq$
    $-0.000015 \times T^2 + 0.0481 \times T - 48.1$
    [Expression 1]

    , where $W_{CaO}/W_{SiO2}$ is the ratio on a mass basis of the CaO content ($W_{CaO}$) to the $SiO_2$ content ($W_{SiO2}$) in the raw material.

6.  The method for producing metallic iron according to claim 5, wherein
    the method further comprises a slag agglomeration step of agglomerating the slag phase by heating the raw material subjected to the high-temperature reduction to a temperature higher than or equal to a melt formation temperature of the slag phase but lower than or equal to a melting temperature of the metallic iron.

7.  The method for producing metallic iron according to claim 6, wherein
    the agglomeration step is performed at a treatment temperature $T_2$ (°C) that satisfies the following relational expression [Expression 2] with respect to a treatment temperature $T_1$ (°C) and oxygen partial pressure Poz in the high-temperature reduction step and $W_{CaO}/W_{SiO2}$ in the raw material:

    [Expression 2]

    $$T_2 \geq 37.3 \times W_{CaO}/W_{SiO2} + 0.12 \times T_1 - 1.58 \times logP_{O2} + 1000$$

8.  The method for producing metallic iron according to any one of claims 1 to 7, wherein
    the method further comprises a crushing and separating step of separating a mixture of the metallic iron and the slag phase obtained by the high-temperature reduction step or further by the agglomeration step into the metallic iron and the slag phase.

9.  The method for producing metallic iron according to any one of claims 1 to 7, wherein
    the method further comprises a heating and melting step of heating and melting a mixture of the metallic iron and the slag phase obtained by the high-temperature reduction step or further by the agglomeration step to separate the mixture into the metallic iron and the slag phase.

10. The method for producing metallic iron according to claim 9, wherein
    the heating and melting step comprises adding an auxiliary material such that a mass ratio of a CaO content to a $SiO_2$ content in a slag to be produced is between 1.5 and 4.0, inclusive.

FIG. 1

FIG. 2

FIG. 3

FIG. 4

FIG. 5

FIG. 6

FIG. 7

## INTERNATIONAL SEARCH REPORT

| International application No. |
|---|
| **PCT/JP2022/043012** |

**A. CLASSIFICATION OF SUBJECT MATTER**

*C21B 13/00*(2006.01)i; *C21B 3/06*(2006.01)i; *C21C 1/02*(2006.01)i; *C22B 5/12*(2006.01)i; *C22B 9/10*(2006.01)i

FI: C21B13/00; C21B3/06; C21C1/02 110; C22B5/12; C22B9/10 101

According to International Patent Classification (IPC) or to both national classification and IPC

**B. FIELDS SEARCHED**

Minimum documentation searched (classification system followed by classification symbols)

C21B13/00; C21B3/06; C21C1/02; C22B5/12; C22B9/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-189762 A (KOBE STEEL, LTD.) 02 September 2010 (2010-09-02) | 1-4 |
|  | claims 1-6, paragraphs [0007], [0010], [0042]-[0068], tables 1-5, fig. 1-4 | |
| Y |  | 6, 8-10 |
| A |  | 5, 7 |
| Y | JP 09-256017 A (KOBE STEEL, LTD.) 30 September 1997 (1997-09-30) | 6, 8-10 |
|  | claims 1-13, paragraphs [0009], [0015]-[0047], tables 1-4, fig. 1-8 | |
| A |  | 1-5, 7 |
| A | JP 2009-041107 A (KOBE STEEL, LTD.) 26 February 2009 (2009-02-26) | 1-10 |
|  | entire text | |
| A | JP 62-230908 A (KOBE STEEL, LTD.) 09 October 1987 (1987-10-09) | 1-10 |
|  | entire text | |
| A | JP 01-104708 A (NKK CORP.) 21 April 1989 (1989-04-21) | 1-10 |
|  | entire text | |

☑ Further documents are listed in the continuation of Box C.      ☑ See patent family annex.

| * Special categories of cited documents: | "T" | later document published after the international filing date or priority date and not in conflict with the application but cited to understand the principle or theory underlying the invention |
|---|---|---|
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **15 December 2022** | **27 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/043012**

**C.     DOCUMENTS CONSIDERED TO BE RELEVANT**

| Category* | Citation of document, with indication, where appropriate, of the relevant passages | Relevant to claim No. |
|---|---|---|
| A | JP 63-223112 A (SUMITOMO METAL IND., LTD.) 16 September 1988 (1988-09-16) entire text | 1-10 |

Form PCT/ISA/210 (second sheet) (January 2015)

**INTERNATIONAL SEARCH REPORT**
Information on patent family members

International application No.

**PCT/JP2022/043012**

| Patent document cited in search report | | | Publication date (day/month/year) | Patent family member(s) | | | Publication date (day/month/year) |
|---|---|---|---|---|---|---|---|
| JP | 2010-189762 | A | 02 September 2010 | US | 2011/0265603 | A1 | |
| | | | | claims 1-20, paragraphs [0006], [0027], [0047]-[0083], tables 1-6, fig. 1-5 | | | |
| | | | | CN | 102272337 | A | |
| | | | | WO | 2010/084822 | A1 | |
| JP | 09-256017 | A | 30 September 1997 | US | 6036744 | A | |
| | | | | claims 1-60, paragraphs [0012], [0086]-[0269], tables 1-4, fig. 1-22 | | | |
| | | | | CN | 1368557 | A | |
| | | | | WO | 1997/034018 | A1 | |
| JP | 2009-041107 | A | 26 February 2009 | US | 2004/0154436 | A1 | |
| | | | | entire text | | | |
| | | | | WO | 2002/103064 | A1 | |
| JP | 62-230908 | A | 09 October 1987 | (Family: none) | | | |
| JP | 01-104708 | A | 21 April 1989 | BR | 8804958 | A | |
| JP | 63-223112 | A | 16 September 1988 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8120322 A
- JP 54083603 A
- JP 60261501 A
- JP 2020020010 A
- WO 2019131128 A